Europäisches Patentamt

(19)  European Patent Office

Office européen des brevets

(11)  **EP 1 211 202 A1**

## (12)  EUROPEAN PATENT APPLICATION
published in accordance with Art. 158(3) EPC

(43)  Date of publication:
**05.06.2002  Bulletin 2002/23**

(21)  Application number: **00944287.2**

(22)  Date of filing: **06.07.2000**

(51)  Int Cl.⁷: **B65G 53/66**, B65G 53/22, B65G 53/48, B65G 53/56

(86)  International application number:
**PCT/JP00/04494**

(87)  International publication number:
**WO 01/04030 (18.01.2001 Gazette 2001/03)**

(84)  Designated Contracting States:
**AT BE CH CY DE DK ES FI FR GB GR IE IT LI LU MC NL PT SE**
Designated Extension States:
**AL LT LV MK RO SI**

(30)  Priority: **08.07.1999  JP  19411699**
**26.07.1999  JP  21012099**
**26.07.1999  JP  21012199**
**26.07.1999  JP  21012299**
**24.08.1999  JP  23687499**
**11.11.1999  JP  32121799**

(71)  Applicant: **NKK CORPORATION**
**Tokyo 100-0005 (JP)**

(72)  Inventors:
- **ISOZAKI, Shinichi NKK Corporation**
  **Tokyo 100-0005 (JP)**
- **KUMAGAI, Shinobu NKK Corporation**
  **Tokyo 100-0005 (JP)**
- **KOHAMA, Yutaka NKK Corporation**
  **Tokyo 100-0005 (JP)**
- **MOCHIZUKI, Mineo NKK Corporation**
  **Tokyo 100-0005 (JP)**

(74)  Representative: **HOFFMANN - EITLE**
**Patent- und Rechtsanwälte**
**Arabellastrasse 4**
**81925 München (DE)**

(54)  **METHOD AND DEVICE FOR CUTTING OUT AND TRANSPORTING POWDER AND GRANULAR MATERIAL**

(57)  In a gas flow-using powdery and granular material fluidization transporting method and apparatus using airflow, an apparatus is provided to feed out powdery and granular material into a transporting tube provided for pneumatically transporting the powdery and granular material. The feeding out apparatus includes intracontainer-pressure means (23a, 23b) for detecting the pressure in a storage container, intra-transporting tube-pressure detecting means (25a, 25b), and pressurized-gas regulating means (17a). In addition, a plurality of discharging ports is provided, and transporting tubes are individually connected with the discharging ports. The discharging ports and transporting tubes are selectively used to pneumatically transfer the powdery and granular material. Moreover, steps of detecting a clogging and taking countermeasures against it are provided. In a blowing method, a high-temperature gas is used, and the amount of a carrier gas is regulated. Furthermore, a distributor is provided for a transfer passageway to allow control to be securely implemented for distribution of the powdery and granular material into a plurality of transfer passageways. Concurrently, a static-electricity generation state is monitored to provide countermeasures against cloggings that can occur in the transfer passageways.

FIG.1

**Description**

**BACKGROUND OF THE INVENTION**

FIELD OF THE INVENTION

The present invention relates to powdery and granular material feeding out and transporting method and apparatus for feeding out powdery and granular material, such as pulverized coal material and waste pulverized plastic material, stored in a storage hopper or the like, to discharging ports and for pneumatically transporting the powdery and granular material.

DESCRIPTION OF THE RELATED ART

JP-B-07-033530, (the term "JP-B" referred herein signifies the "examined Japanese patent publication"), discloses example powdery and granular material feeding-out and transporting method and apparatus used for blowing pulverized coal material into a blast furnace. The invention disclosed in the publication relates to a powdery and granular material blowing method can be summarized as follows. A plurality of powdery and granular material blowing hoppers is parallel-disposed below a powdery and granular material storage hopper. From the powdery and granular material storage hopper, the powdery and granular material is filled alternately into the plurality of powdery and granular material blowing hoppers. Then, the powdery and granular material is fed out and into a powdery and granular material transfer pipe through a powdery and granular material feeder that includes an agitating function and that is provided below the powdery and granular material blowing hopper. Then, the powdery and granular material is transferred in confluence with a carrier gas to be blown into the blast furnace.

However, in the conventional example as configured above, the pressure in the blowing hopper is regulated, and a pressure of a transfer support gas (feeding-out-side pressure) that is fed to the powdery and granular material feeder is set without taking pressure variations in the powdery and granular material transfer pipe. That is, the pressure is set regardless of the pressure in the powdery and granular material transfer pipe. The pressure in the powdery and granular material transfer pipe on the other side always varies because of various factors, such as powdery and granular material flow conditions, powdery and granular material flow rates, gas flow rates, and powdery and granular material fed end pressure. As such, problems as described below occur in the feeding-out of powdery and granular material cut out from the blowing hopper depending on the relationship between the pressures on the two sides in the configuration in which the feeding-out-side pressure is set regardless of the pressure in the powdery and granular material transfer pipe. When the pressure on the feeding-out side is lower than that in the powdery and granular material transfer pipe, the powdery and granular material needs to be fed out in the direction from the low-pressure portion to the high-pressure portion; hence, the feeding-out is impossible. On the other hand, when the pressure of the feeding-out side is extremely higher than the pressure in the powdery and granular material transfer pipe, the powdery and granular material is force-fed toward the powdery and granular material transfer pipe, making quantitative feeding-out to be impossible. In addition, problems as described can also occur. When an feeding-out apparatus is used to feed out the powdery and granular material flowing from a blowing tank, the shape of an feeding-out pipe provided immediately below an feeding-out portion can be a big factor for causing clogging. In the method in which the powdery and granular material is caused to flow down from the feeding-out pipe connected perpendicular to the powdery and granular material transfer pipe, a sufficient transfer rate in the transfer direction cannot be obtained for the powdery and granular material. Hence, the powdery and granular material flows leaving residual part in a connection portion, causing clogging.

In addition, for example, JP-A-57-195030, (the term "JP-A" referred herein signifies the "unexamined Japanese patent publication"), discloses an invention of a pneumatic transfer apparatus for pneumatically transporting powdery and granular material. The publication discloses one of the important issues regarding the pneumatic transfer of powdery and granular material. The publication discloses a clogging-detecting means and clogging-eliminating means intended to solve the problem of occurrence of clogging because of an insufficient gas flow velocity and irregular shapes of powdery and granular material in a course of a transfer passageway.

The contents of the publication can be summarized as follows. In a clogging-eliminating method, a powdery and granular material transfer pipe is sectioned via shut-off valves into a plurality of sections. The pipe is sectioned using transfer-directional-downstream-end sectional valves, pass-through compressed air is provided therethrough, and the operation is iterated.

However, the above-described conventional example causes problems as described below. The clogging-detecting method is a general-purpose technique in which the detection is performed using pressure differentials. In this case, however, fine pressure-differential control needs to be performed, but accuracy is insufficient. In this aspect, the proposed method cannot be evaluated as an efficient method. In addition, there is proposed another clogging-detecting method that uses ultrasonic flow switches. However, the method tends to introduce erroneous operations

EP 1 211 202 A1

depending on the measurement position.

According to the clogging-eliminating method disclosed in the above-referenced JP-A-57-195030, when a clogging has occurred, high-pressure air is injected in the individual sections to push out the clogging from an upstream portion to a downstream portion. However, a significantly high energy is necessary to push out a clogging substance in the transfer pipe in the same direction as the transfer direction. For this reason, in the method disclosed in the above-referenced publication, it is presumed that the pipe is sectioned into the plurality of sections, and high-pressure air is injected into each of the sections. As such, a complicated facility is necessary, and a plurality of valve-shut-off operations needs to be performed, taking time to achieve the clogging elimination.

In addition, JP-A-5-124727 discloses a method in which when a clogging has occurred, a reverse pressure is applied, and the clogging is urged to return into an injection tank. This method is considered not to cause an energy problem described above.

However, in many cases, clogging can still occur because of mixture of foreign substances or irregularly shaped transfer substances. As such, in the above-described method in which the clogging-caused substance is returned to the injection tank, another clogging can reoccur for the same reason.

The present invention is made to solve the problems described above. Accordingly, an object of the present invention is to obtain a powdery and granular material feeding-out apparatus capable of securely implementing quantitative feeding-out of powdery and granular material regardless of pressure variations in a powdery and granular material transfer pipe. Another object of the present invention is to obtain a powdery and granular material feeding-out apparatus capable of implementing smooth powdery and granular material feeding-out without causing clogging in an feeding-out pipe and a transfer pipe when the powdery and granular material is fed out into the feeding-out pipe.

Still another object of the present invention is to obtain powdery and granular material pneumatic-transporting method and apparatus that are capable of securely detecting clogging. Still another object of the present invention is to obtain powdery and granular material pneumatic-transporting method and apparatus that are capable of removing clogging using low energy and of eliminating the cause of the clogging to prevent recurrence of the clogging for the same cause.

Still another object of the present invention is to obtain powdery and granular material pneumatic-transporting method and apparatus arranged so as to securely perform distribution control not to cause intra-transfer-passageway clogging in a powdery and granular material pneumatic-transporting method for using a distributor provided midway of a transfer passageways to distribute powdery and granular material into a plurality of transfer passageways and to transfer the powdery and granular material.

Still another object of the present invention is to obtain a powdery and granular blowing method that reduces the carrier-gas amount, thereby enabling equipment costs to be reduced. Still another object of the present invention is to obtain powdery and granular material blowing method and apparatus capable of achieving a high solid-gas ratio and reducing wear of a tube.

Yet still another object of the present invention is to obtain powdery and granular material pneumatic-fluid transporting method and apparatus capable of (1) blowing powdery and granular material into a desired reactor container at low cost by using a carrier gas for providing the lowest flow velocity necessary for transporting the powdery and granular material transfer without using an aeration gas dedicated for the powdery and granular material fluidization, and (2) performing secure regulation of the blowing transfer amount and efficient transfer even for several-millimeter-order granules such as waste pulverized plastic material.


## SUMMARY OF THE INVENTION

To achieve the above-described objects, the present invention discloses the contents as follows.

First, a powdery and granular material feeding-out apparatus includes:

a quantitative feeding device for quantitatively feeding out powdery and granular material in a storage container into a transporting tube used for pneumatically transporting the powdery and granular material;
an device for detecting a pressure in the aforementioned container;
a device for detecting pressure in a transporting tube for detecting pressure in the aforementioned transporting tube; and
a pressure regulator for regulating the pressure in the aforementioned storage container according to results of detection performed by the aforementioned device for detecting pressure in a storage container and the aforementioned device for detecting pressure in a transporting tube to cause the pressure in the aforementioned storage container to be higher than the pressure in the aforementioned transporting tube.

Second, a powdery and granular material feeding-out apparatus includes:

a feeding device for quantitatively feeding out powdery and granular material in a storage container via an feeding-out pipe into a transporting tube provided to pneumatically transfer the aforementioned powdery and granular material,

wherein the aforementioned feeding-out pipe includes:

a vertical section vertically extending, and a sloped portion that is provided continually to the aforementioned vertical section and that slopes in a transfer direction with respect to the aforementioned vertical section; and an acceleration-gas nozzle for injecting an acceleration gas along a slope direction to the aforementioned sloped portion.

Third, a powdery and granular material feeding-out and transporting method includes:

a step of being carried out in a configuration including a plurality of discharging ports provided in a powdery and granular material feeding-out apparatus for quantitatively feeding out powdery and granular material and -a plurality of transporting tubes individually connected with the aforementioned plurality of discharging ports, wherein the aforementioned step selectively uses the aforementioned plurality of discharging ports and the aforementioned plurality of transporting tubes to pneumatically transfer the aforementioned powdery and granular material; a step of detecting a clogging in the aforementioned transporting tube transporting the aforementioned powdery and granular material; a step of being carried out when a clogging is detected, the aforementioned step terminating feeding-out from one of the aforementioned plurality of discharging ports that is connected with corresponding one of the aforementioned plurality of transporting tubes in which the aforementioned clogging has been detected; and a step of feeding out the aforementioned powdery and granular material from one of the aforementioned plurality of discharging ports that is in a standby state.

Fourth, a powdery and granular material feeding-out apparatus includes:

a storage container for storing powdery and granular material; a screw feeder for quantitatively feeding-out the aforementioned powdery and granular material stored in the aforementioned storage container; discharging ports positioned lower of two ends of the aforementioned screw feeder; transporting tubes individually connected with the aforementioned discharging ports positioned at the aforementioned two ends; a clogging detector that is provided for each of the aforementioned transporting tubes and that detects a clogging in each of the aforementioned transporting tubes; and a controller for inputting a clogging signal from the aforementioned clogging detector for shifting a rotational direction of the aforementioned screw feeder.

Fifth, a powdery and granular material feeding-out apparatus includes:

a storage container for storing powdery and granular material; and a screw feeder including a spiral screw formed bilaterally-symmetric with respect to an axial center as a boundary and discharging ports at two ends.

Sixth, a powdery and granular material feeding-out apparatus configured of at least one set of three powdery and granular material feeding-out apparatuses each including:

a storage container for storing powdery and granular material; and a screw feeder including a spiral screw formed bilaterally-symmetric with respect to an axial center as a boundary and discharging ports at two ends, wherein two of the aforementioned three powdery and granular material feeding-out apparatus are parallel-disposed, and the aforementioned powdery and granular material fed out from the aforementioned discharging ports of the other powdery and granular material feeding-out apparatus are individually fed into the aforementioned two powdery and granular material feeding-out apparatuses.

Seventh, a powdery and granular blowing method includes:

a step of transporting powdery and granular material by using a high-temperature carrier gas; and

a step of blowing transferred powdery and granular material.

Eighth, a powdery and granular blowing method includes:

a step of quantitatively feeding-out powdery and granular material from a blowing tank into a transporting tube;
a step of pneumatically transporting the aforementioned powdery and granular material through the aforementioned transporting tube; and
a step of setting the amount of the aforementioned carrier gas to cause the velocity of the aforementioned carrier gas in the aforementioned transporting tube to be a lowest gas flow velocity expressed by

$$Umin = Umin0 \times (P0/P1)^{1/2}$$

Where,

Umin:      lowest gas flow velocity (m/s) at the intra-transporting tube pressure ;
Umin0:      lowest gas flow velocity (m/s) at the atmospheric pressure ;
P0:      atmospheric pressure ($kg/cm^2$); and
P1:      intra-transporting tube pressure ($kg/cm^2$).

Ninth, a powdery and granular material blowing apparatus includes:

an apparatus for quantitatively feeding-out powdery and granular material from a blowing tank;
an apparatus for pneumatically transporting the aforementioned powdery and granular material through a transporting tube;
a flow-rate regulator for regulating a blowing flow rate of a carrier gas;
a pressure detector for detecting a gas pressure in the aforementioned transporting tube; and
a controller for controlling the aforementioned flow-rate regulator according to the result of detection performed by the aforementioned pressure detector,

wherein the aforementioned controller controls the aforementioned flow-rate regulator to cause the velocity of the aforementioned carrier gas in the aforementioned transporting tube to be a lowest gas flow velocity expressed by

$$Umin = Umin0 \times (P0/P1)^{1/2}$$

Where,

Umin:      lowest gas flow velocity (m/s) at the intra-transporting tube pressure ;
Umin0:      lowest gas flow velocity (m/s) at the atmospheric pressure;
P0:      atmospheric pressure ($kg/cm^2$); and
P1:      intra-transporting tube pressure ($kg/cm^2$).

Tenth, a powdery and granular material blowing method includes:

a step of quantitatively feeding-out powdery and granular material from a blowing tank into a transporting tube;
a step of pneumatically transporting the aforementioned powdery and granular material through the aforementioned transporting tube; and
a step of discharging a carrier gas in a plurality of portions in a course of the aforementioned transporting tube to cause a gas velocity to be a lowest gas flow velocity necessary for transporting the aforementioned powdery and granular material.

Eleventh, a powdery and granular material blowing apparatus includes:

an apparatus for quantitatively feeding-out powdery and granular material from a blowing tank into a transporting tube;
an apparatus for pneumatically transporting the aforementioned powdery and granular material through the aforementioned transporting tube; and

a carrier-gas discharging device for discharging a carrier gas in a plurality of portions in a course of the aforementioned transporting tube to cause a gas velocity to be a lowest gas flow velocity necessary for transporting the aforementioned powdery and granular material.

Twelfth, a powdery and granular material pneumatic-transporting method including:

a step of distributing powdery and granular material from a transporting tube into a plurality of branch tubes by using a distributor; and
a step of blowing gas into each of the aforementioned branch tubes to cause the aforementioned gas to resist the flow, thereby regulating balance in flow rate of the aforementioned powdery and granular material individually flowing into the aforementioned branch tube.

Thirteenth, a powdery and granular material pneumatic-transporting method includes:

a step of distributing powdery and granular material from a transporting tube into a plurality of branch tubes by using a distributor;
a step of clogging at least one of the aforementioned plurality of branch tubes; and
a step of blowing gas into shut-off one of the aforementioned branch tubes to fluidize the aforementioned powdery and granular material in the aforementioned one of the aforementioned plurality of branch tubes, thereby preventing clogging from occurring in the branch tube.

Fourteenth, a powdery and granular material pneumatic-transporting apparatus includes:

a distributor provided between a transporting tube and a plurality of branch tubes to distribute powdery and granular material in the amount from the aforementioned transporting tube to the aforementioned plurality of branch tubes; and
nozzles connected with the aforementioned plurality of branch tubes to blowing gas in a direction along which the aforementioned gas resists the flow.

Fifteenth, a powdery and granular material pneumatic-transporting apparatus includes:

a distributor provided between a transporting tube and a plurality of branch tubes to distribute powdery and granular material in the amount from the aforementioned transporting tube to the aforementioned plurality of branch tubes;
shut-off valves individually connected with the aforementioned plurality of branch tubes; and
nozzles that are provided between the aforementioned shut-off valves and the aforementioned distributor and that blowing gas to the aforementioned plurality of branch tubes.

Sixteenth, a powdery and granular material pneumatic-transporting apparatus includes:

a distributor provided between a transporting tube and a plurality of branch tubes to distribute powdery and granular material in the amount from the aforementioned transporting tube to the aforementioned plurality of branch tubes;
shut-off valves individually connected with the aforementioned plurality of branch tubes; and
nozzles that are provided between the aforementioned shut-off valves and the aforementioned distributor and that blowing gas to the aforementioned plurality of branch tubes.

Seventeenth, a powdery and granular material pneumatic-transporting method includes:

a step of pneumatically transporting powdery and granular material from an upstream side to a downstream side;
a step of monitoring a generation state of static electricity occurring in a transporting tube; and
a step of detecting a clogging by determining an instance wherein the aforementioned static electricity has not occurred for at least a predetermined time to be an instance wherein a clogging has occurred.

Eighteenth, a powdery and granular material pneumatic-transporting method includes:

a step of pneumatically transporting powdery and granular material from an upstream side to a downstream side of a transporting tube;
a step of being carried out when a clogging has occurred in the aforementioned transporting tube, wherein the aforementioned step feeds a reverse-transfer gas from a downstream side to an upstream side, thereby eliminating the aforementioned clogging; and

a step of collecting a clogging substance caused the aforementioned clogging into a collection container provided outside of the aforementioned transporting tube.

Nineteenth, a powdery and granular material pneumatic-transporting method includes:

a step of pneumatically transporting powdery and granular material from an upstream side to a downstream side of a transporting tube;

a step of monitoring a generation state of static' electricity occurring in the aforementioned transporting tube because of pneumatic transfer of the aforementioned powdery and granular material, thereby determining an instance wherein the aforementioned static electricity has not occurred for at least a predetermined time to be an instance wherein a clogging has occurred;

a step of pneumatically transporting powdery and granular material from an upstream side to a downstream side of a transporting tube;

a step of feeding a reverse-transfer gas from a downstream side to an upstream side, thereby eliminating the aforementioned clogging; and

a step of collecting a clogging substance caused the aforementioned clogging into a collection container provided outside of the aforementioned transporting tube.

Twentieth, a powdery and granular material pneumatic-transporting apparatus includes:

a transporting tube for pneumatically transporting powdery and granular material from an upstream side to a downstream side;

an electric-charge tube provided midway of the aforementioned transporting tube via an insulation member; and

an apparatus that is connected with the aforementioned electric-charge tube, that causes static electricity charged in the aforementioned electric-charge tube to discharge in units of a predetermined time, that monitors a charged state of the aforementioned electric-charge tube, and that issues a signal when no charge occurs for a predetermined time, thereby controlling the charge.

Twenty-first, a powdery and granular material pneumatic-transporting apparatus includes:

a transporting tube for pneumatically transporting powdery and granular material from an upstream side to a downstream side;

a collection container that is provided on a downstream side of the aforementioned transporting tube in communication with a transfer passageway and that collects a clogging substance caused a clogging; and

a gas-feeding device that is provided on a downstream side of the aforementioned transporting tube and that feeds a high-pressure gas from a downstream side to an upstream side.

Twenty-second, a powdery and granular material pneumatic-transporting apparatus includes:

a transporting tube for pneumatically transporting powdery and granular material from an upstream side to a downstream side;

an electric-charge tube provided midway of the aforementioned transporting tube via an insulation member;

an electric-charge controller that is connected with the aforementioned electric-charge tube, that causes static electricity charged in the aforementioned electric-charge tube to discharge in units of a predetermined time, that monitors a charged state of the aforementioned electric-charge tube, and that issues a signal when no charge occurs for a predetermined time, thereby controlling the charge;

a collection container that is provided on a downstream side of the aforementioned transporting tube in communication with a transfer passageway and that collects a clogging substance caused a clogging; and

a gas-feeding device that is provided on a downstream side of the aforementioned transporting tube and that feeds a high-pressure gas from a downstream side to an upstream side.

Twenty-third, a gas flow-using powdery and granular material-fluidizing-and-feeding method includes:

a step of continually feeding powdery and granular material into a chamber by using a mechanical feeding-out apparatus, thereby continually feeding the aforementioned powdery and granular material into the aforementioned chamber;

a step of injecting a planar gas flow onto the aforementioned powdery and granular material fed into the afore-

**EP 1 211 202 A1**

mentioned chamber from a bottom-surface-circumference sidewall portion in the aforementioned chamber toward a central portion of a bottom surface of the aforementioned chamber; and

a step of feeding the aforementioned powdery and granular material fluidized and blown to an entry of a transportation tube extending from an inside portion of the aforementioned chamber to an outside portion, the aforementioned transportation tube being preliminarily provided in a spacing into which the aforementioned powdery and granular material is blown.

Twenty-fourth, a gas flow-using powdery and granular material-fluidizing-and-feeding apparatus includes:

a mechanical feeding-out apparatus for feeding-out powdery and granular material;

a fluidization feed chamber that is provided in communication with a lower portion of the aforementioned feeding-out apparatus, that fluidizes the aforementioned powdery and granular material fed out from the aforementioned feeding-out apparatus by using a gas flow, and that feeds the aforementioned powdery and granular material fluidized to an outside portion by using the aforementioned gas flow, the aforementioned fluidization feed chamber including a slit-like nozzle for injecting a planar gas flow in a direction horizontal with respect to a circumferential sidewall of an inner bottom surface thereof toward a central portion of the aforementioned inner bottom surface; and

a feed tube for introducing the aforementioned powdery and granular material from an inside portion of the aforementioned fluidization feed chamber to an outside portion thereof by using the aforementioned gas flow,

wherein the aforementioned feed tube includes a inflow part for the aforementioned powdery and granular material, and the aforementioned inflow part is positioned in an upper spacing of the aforementioned central portion of the aforementioned inner bottom surface of the aforementioned fluidization feed chamber.

**BRIEF DESCRIPTION OF THE DRAWINGS**

Fig. 1 is an explanatory view showing an apparatus of Embodiment 1 according to Best Mode 1 of the present invention;

Fig. 2 is an explanatory view showing the overall configuration of an apparatus of Embodiment 2 according to Best Mode 1 of the present invention;

Fig. 3 is an explanatory view showing essential portions of Embodiment 2 according to Best Mode 1 of the present invention;

Fig. 4 is a front view of the essential portions shown in Fig. 3 according to Best Mode 1 of the present invention;

Fig. 5 is an explanatory view illustrating operation of Embodiment 2 according to Best Mode 1 of the present invention;

Fig. 6 is an explanatory view showing another pattern of Embodiment 2 according to Best Mode 1 of the present invention;

Fig. 7 is an explanatory view showing an apparatus of Embodiment 1 according to Best Mode 2 of the present invention;

Fig. 8 is an explanatory view showing an apparatus of Embodiment 2 according to Best Mode 2 of the present invention;

Fig. 9 is an explanatory view showing another pattern of Embodiment 2 according to Best Mode 2 of the present invention ;

Fig. 10 is an explanatory view showing an apparatus of Embodiment 1 according to Best Mode 3 of the present invention;

Fig. 11 is an explanatory view showing an apparatus of Embodiment 2 according to Best Mode 3 of the present invention;

Fig. 12 is an explanatory graph showing operation and advantages of Embodiment 2 according to Best Mode 3 of the present invention;

Fig. 13 is an explanatory view showing overall configuration of Embodiment 3 according to Best Mode 3 of the present invention;

Fig. 14 is an explanatory view showing essential portions of Embodiment 3 according to Best Mode 3 of the present invention;

Fig. 15 is an explanatory graph showing operation and advantages of Embodiment 3 according to Best Mode 3 of the present invention;

Fig. 16 is an explanatory view showing an apparatus of Embodiment 1 according to Best Mode 4 of the present invention;

8

Fig. 17 is a side view including a granule side view of a branch section of Embodiment 1 according to Best Mode 4 of the present invention;

Fig. 18 is an exploded view of the branch section shown in Fig. 16 according to Best Mode 4 of the present invention;

Fig. 19 is a graph showing experiment results in Embodiment 1 according to Best Mode 4 of the present invention;

Fig. 20 is an explanatory view showing an apparatus of Embodiment 2 according to Best Mode 4 of the present invention;

Fig. 21 is an explanatory view showing an apparatus of Embodiment 1 according to Best Mode 5 of the present invention;

Fig. 22 is a view showing exploded portions of a clogging-detector 50 shown in Fig. 21 according to Best Mode 5 of the present invention;

Fig. 23 is a graph showing a charging-discharging state in an electric-charge controller 515 of Embodiment 1 according to Best Mode 5 of the present invention;

Fig. 24 is an explanatory view of an apparatus of Embodiment 2 according to Best Mode 5 of the present invention;

Fig. 25 is an outline view showing a facility flow suitable for implementation according to the present invention;

Fig. 26 is a schematic vertical cross-sectional view showing a powdery and granular material fluidization transfer chamber and a piping system provided in the vicinity thereof according to Best Mode 6 of the present invention;

Fig. 27 is a cross-sectional view along the arrow-line A-A in Fig. 26 according to Best Mode 6 of the present invention; and

Fig. 28 shows graphs showing comparison between the embodiment and a comparative example regarding controllability of the amount of waste pulverized plastic material blown into a blast furnace and a flow-velocity unit consumption of a used gas.

## DESCRIPTION OF THE PREFERRED EMBODIMENT

**BEST MODE 1**

EMBODIMENT 1

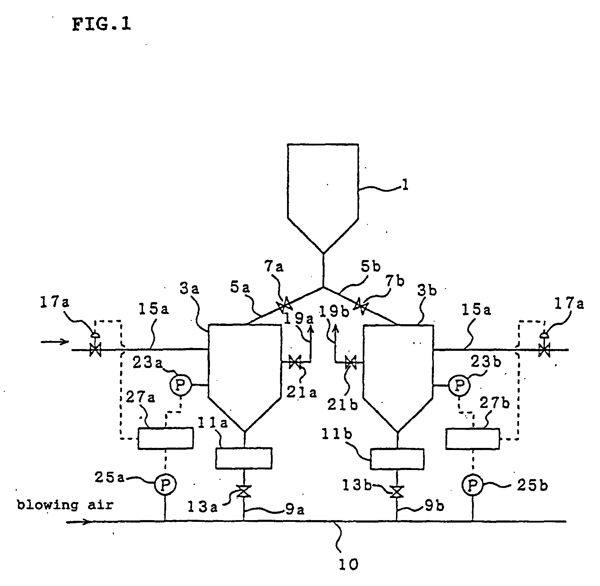

Fig. 1 is an explanatory view of Best Mode 1 according to the present invention. Numeral 1 denotes a storage hopper for storing powdery and granular materials. Symbols 3a and 3b denote powdery and granular material blowing hoppers parallel-disposed below the storage hopper 1 via introductory tubes 5a and 5b. Symbols 7a and 7b individually denote introductory valves provided midway of the respective introductory tubes 5a and 5b.

Symbols 9a and 9b denote feeding-out tubes that connect discharging ports of the respective powdery and granular material blowing hoppers 3a and 3b to a transporting tube 10. Symbols 11a and 11b individually denote feeders that are connected with the respective feeding-out tubes 9a and 9b and those quantitatively feed out the powdery and granular material. Symbols 13a and 13b are individually denoted feeding-out valves connected with the respective feeding-out tubes 9a and 9b.

Symbols 15a and 15b individually denote pressurized-gas tubes for introducing pressurized gas, such as pressurized air. Symbols 17a and 17b individually denote pressurized-gas-regulating valves connected with the respective pressurized-gas tubes 15a and 15b. Symbols 19a and 19b individually denote discharge tubes for discharging pressurized gas stored in the respective powdery and granular material blowing hoppers 3a and 3b. Symbols 21a and 21b individually denote discharge valves 21a and 21b connected with the respective discharge tubes 19a and 19b.

Symbols 23a and 23b individually denote hopper-pressure detectors for detecting the pressures in the respective powdery and granular material blowing hoppers 3a and 3b. Symbols 25a and 25b individually denote intra-device for detecting pressure in a transporting tube for detecting the pressure in the transporting tube 10. Symbols 27a and 27b individually denote pressure controllers that input detection signals of the hopper-pressure detectors 23a and 23b and intra-device for detecting pressure in a transporting tubes 25a and 25b. According to the corresponding input detection signals, the pressure controllers 27a and 27b control open/close operations and openings of the respective pressurized-gas regulating valves 17a and 17b, thereby controlling the pressure in the respective powdery and granular material blowing hoppers 3a and 3b.

The pressure of the individual powdery and granular material blowing hoppers 3a and 3b is controlled to be higher by a slight amount (about 0.1 to 1 kg/cm$^2$) than the pressure in the transporting tube 10.

Hereinbelow, operation of the present embodiment configured as above will be described. In the present embodiment, powdery and granular material loaded into the storage hopper 1 is introduced into the blowing hoppers 3a and 3b. The blowing hoppers 3a and 3b are shiftily used; and thereby, the powdery and granular material is continually fed out into the transporting tube 10.

First, the powdery and granular material is loaded into the storage hopper 1 and is then introduced into the powdery and granular material blowing hopper 3a. In this case, in a state in which all the valves are closed, the discharge valve 21a is controlled to open, and the introductory valve 7a is then controlled to open. Thereby, the powdery and granular material in the storage hopper 1 is introduced into the blowing hopper 3a. The weight of the powdery and granular material-blowing hopper 3a is measured using a load cell (not shown). When the weight has reached an upper limit value, the introductory valve 7a is closed, and the discharge valve 21a is closed.

Subsequently, the pressurized-gas-regulating valve 17a is controlled to open to allow pressurized gas to be fed into the powdery and granular material blowing hopper 3a. At this time, the pressure controller 27a inputs pressure signals of the device for detecting pressure in a transporting tube 25a and the hopper-pressure detectors 23a. Then, the pressure controller 27a controls the open/close operation and the opening of the pressurized-gas regulating valve 17a to increase the pressure in the blowing hoppers 3a and 3b to be higher by a slight amount (about 0.1 to 1 kg/cm$^2$) than that in the transporting tube 10.

According to the above operation, when the value of the pressure in the powdery and granular material blowing hopper 3a has reached a predetermined value, the feeder 11a is operated. Concurrently, the feeding-out valve 13a opens to allow the powdery and granular material to be quantitatively fed out from the feeding-out tube 9a into the transporting tube 10.

During the powdery and granular material feeding-out, the pressure controller 27a keeps monitoring the individual pressures in the transporting tube 10 and the powdery and granular material blowing hopper 3a. Thereby, as described above, the pressure controller 27a controls the relationship between the pressures on the two sides such that the pressure in the blowing hopper 3a is higher by a slight amount (about 0.1 to 0.5 kg/cm$^2$) than those in the transporting tube 10.

According to the pressure control performed in,the above manner, the powdery and granular material can securely be quantitatively fed out from the blowing hopper 3a into the transporting tube 10.

Upon commencement of the feeding-out from the blowing hopper 3a, the discharge valve 21b opens. Subsequently, the introductory valve 7b opens to introduce the fluidized powdery and granular material in the storage hopper 1 into the blowing hopper 3b. After completion of the powdery and granular material introduction, the introductory valve 7b and the discharge valve 21b open and enter a standby state. The introduction of the powdery and granular material into the blowing hopper 3b may either be performed immediately after completion of introduction into the blowing hopper 3a or be performed with an interval of a predetermined time after the commencement of feeding-out from the blowing hopper 3a. In either way, the arrangement is made such that the fluidized powdery and granular material introduction to the blowing hopper 3b is completed before completion of introduction of the fluidized powdery and granular material into the blowing hopper 3a.

When the weight of the blowing hopper 3a has reached a lower limit value, operation of the feeder 11a is controlled to terminate. Concurrently, the feeding-out valve 13a and the pressurized-gas-regulating valve 17a are controlled to close, and in addition, the discharge valve 21a is controlled to open so as to allow pressurized gas in the blowing hopper 3a to be discharged.

Upon completion of a termination operation of the feeding-out from the blowing hopper 3a, another operation of feeding-out from the blowing hopper 3b commences. The operation of feeding-out from the blowing hopper 3b is similar to the operation of feeding-out from the blowing hopper 3a.

In the above-described manner, the two fluidized powdery and granular material blowing hoppers 3a and 3b are sequentially shifted from each other. Hence, continual feeding-out can be implemented.

The two hoppers can be smoothly shifted from each other in the following arrangement. In an event of shifting from the blowing hopper 3a to the blowing hopper 3b, when the amount of remaining fluidized powdery and granular material in the blowing hopper 3a on the terminating side has reduced to a specific level, the feeding-out amount of the feeder 11b of the blowing hopper 3b on the feeding-out-commencement side is gradually increased.

In this way, in the present embodiment, the pressure in the transporting tube 10 and the individual pressures in the fluidized powdery and granular material blowing hoppers 3a and 3b are regulated so that the pressures in the fluidized powdery and granular material blowing hoppers 3a and 3b are always be slightly higher than the pressure of the transporting tube 10. This arrangement enables the feeding-out to be smoothly and quantitatively performed from the blowing hoppers 3a and 3b to the transporting tube 10.

EMBODIMENT 2

Embodiment 2 relates to a fluidized powdery and granular material feeding-out apparatus capable of implementing smooth feeding-out of fluidized powdery and granular material without causing a clogging phenomenon either in an feeding-out tube or a connection portion of the feeding-out tube and a transporting tube during feeding-out of the fluidized powdery and granular material to the transporting tube.

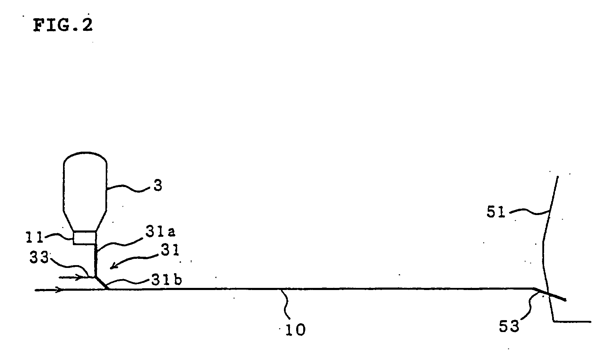

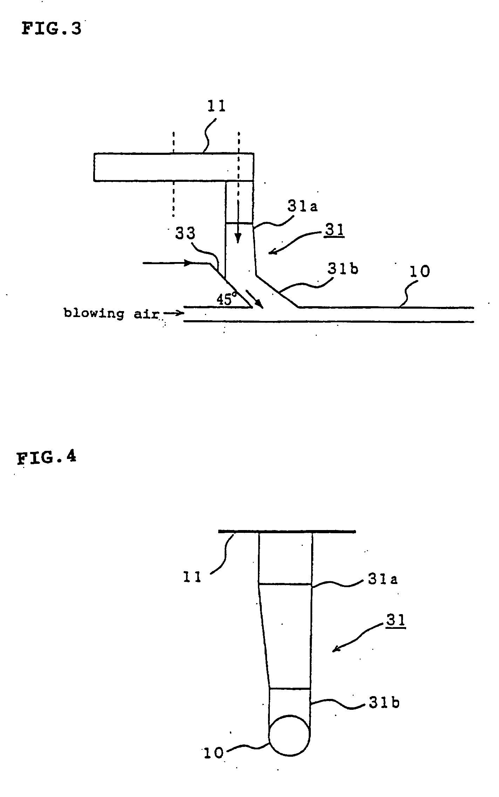

Fig. 2 is an explanatory view showing the overall configuration of the fluidized powdery and granular material feeding-out method applied to an apparatus that blowing fluidized powdery and granular material, such as waste pulverized plastic material used as fuel material, to a transporting tube. Fig. 3 is an explanatory view of essential portions of the apparatus shown in Fig. 2. Fig. 4 is a front view of the essential portions shown in Fig. 3. Referring to these figures, numeral 3 denotes a blowing hopper. Numeral 11 denotes a mechanical feeder for quantitatively feeding-out powdery and granular material from the blowing hopper 3. Numeral 31 denotes an feeding-out tube for introducing the fluidized powdery and granular material fed out from the mechanical feeder 11 into a transporting tube 10. Numeral 33 denotes an acceleration-gas nozzle that is connected with the feeding-out tube 31 and that injects pressurized gas, such as air, to increase the flow velocity of the fluidized powdery and granular material. Numeral 53 denotes a lance 53 that is provided at the end of the transporting tube 10 and that blowing the fluidized powdery and granular material into a blast furnace 51.

The feeding-out tube 31 is configured to include a vertical section 31a and a sloped section 31b. The vertical section 31a includes an upper end portion connected with the mechanical feeder 11 and that extends substantially vertical. The sloped section 31b is provided continuously to the vertical section 31a and that is connected with the transporting tube 10 in a form bent forward (in the transfer direction) at an angle of about 45 degrees with respect to the vertical section 31a.

While the feeding-out tube 31 has a shape deformed little by little in the direction from the upper end to the lower end, it has a cross section that is substantially constant. With a tube having a small cross section, a disadvantage occurs in that fluidized powdery and granular material is apt to jam thereat. However, with a tube having a large cross section, a disadvantage occurs in that the flow velocity of fluidized powdery and granular material decreases. To eliminate these disadvantages, the tube having the constant cross section is provided.

The feeding-out tube 31 is shaped to have a slope only on one side. This avoids a so-called wedge-effect-attributed hanging phenomenon that can occur in a case where two-way slopes are provided.

In addition, the vertical section 31a is formed to be as long as possible to obtain a highest-possible drop speed of the fluidized powdery and granular material. Furthermore, the sloped section 31b is formed to have a smallest-possible length that concurrently satisfies requirements for acceleration described below.

Hereinbelow, the configuration will be further described with reference to Fig. 3. The acceleration-gas nozzle 33 is provided along the slope direction on a rear side of the sloped section 31b, and is connected with an acceleration-gas supply source (not shown) in the sloping-down direction along the sloped section 31b. The acceleration-gas nozzle 33 is thus configured to be capable of injecting acceleration gas in the sloping-down direction along the sloped section 31b.

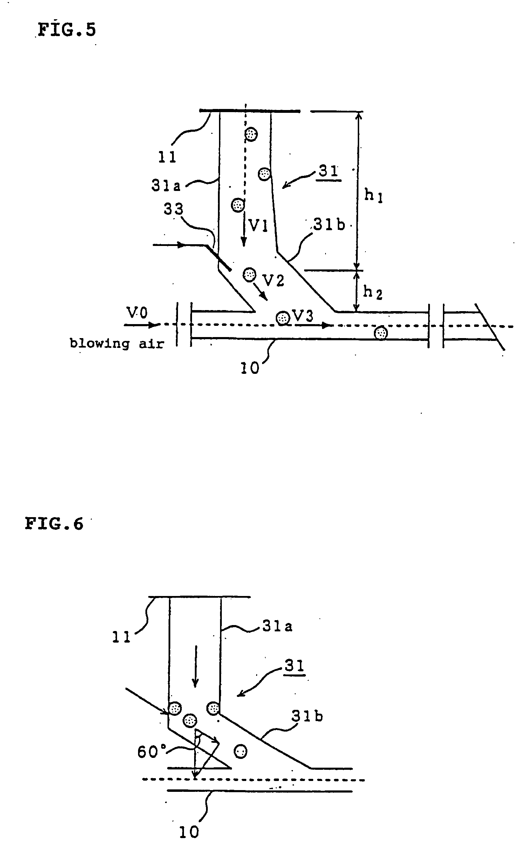

Hereinbelow, operation of the present embodiment configured as described above will be described. Fig. 5 is a view for describing the operation. In the figure, the same numerals/symbols are assigned to portions corresponding to those shown in Fig. 3. Circles in the figure each represent a granule. Symbol $h_1$ represents a vertical distance from a lower face of the mechanical feeder 11 to a bent portion of the feeding-out tube 31. Symbol $h_2$ represents a vertical distance from the bent portion of the feeding-out tube 31 to a connection face of the feeding-out tube 31 and the transporting tube 10.

Fluidized powdery and granular material naturally drops off the mechanical feeder 11 by the distance $h_1$ at a flow velocity $V_1$ (vertically downward). The fluidized powdery and granular material is then redirected by an acceleration gas to fall along the sloped section 31b, and is accelerated to gain a flow velocity $V_2$. Subsequently, at the portion connected with the transporting tube 10, the fluidized powdery and granular material is redirected by blowing air stored in the transporting tube 10 to the blowing direction, thereby having a flow velocity $V_3$.

In this case, an arrangement is made such that when the flow velocity of the blowing air is represented by $V_0$, a transfer-directional (horizontal) component of the flow velocity $V_2$ of the air redirected and accelerated by the acceleration gas is equal to the flow velocity $V_0$. By this arrangement, the fluidized powdery and granular material can be smoothly transferred to be confluent with the flow of the blowing air at the connection portion, and the amount of blowing air can be minimized.

As described above, in the present embodiment, the sloped section 31b is provided midway of the feeding-out tube 31, and acceleration gas is injected in the slant section 31b to redirect and accelerate fluidized powdery and granular material, thereby equalizing the horizontal component of flow velocity to the injection-air flow velocity $V_0$. Thereby, confluence of the fluidized powdery and granular material is smoothly performed, and occurrence of a clogging phenomenon can be prevented.

In the above-described embodiment, although the slope angle is set to 45 degrees with respect to the vertical axis, the present invention is not limited thereby. For example, as shown in Fig. 6, the slope angle may be set to 60 degrees with respect to the vertical axis. In this case, since the amount of redirection is larger in comparison to the case of 45 degrees, the amount of the acceleration gas or the flow velocity needs to be set greater. Nevertheless, however, smooth confluence of fluidized powdery and granular material with blowing air can be implemented.

With a slope angle that is significantly less than 45 degrees, smooth confluence is hindered in the confluence portion. In view of the above, the minimum slope angle is preferably 40 degrees.

Since Best Mode 1 is thus configured, it has advantages as described below.

The configuration includes an intracontainer-pressure detecting means, intra-transporting tube-pressure detecting means, and pressure-regulating means for regulating the pressure. The intracontainer-pressure detecting means detects the pressure in the storage container. The intra-transporting tube-pressure detecting means detects the pressure in the transporting tube. The pressure-regulating means regulates the pressure according to the result of detecting performed by the intracontainer-pressure detecting means and the intra-transporting tube-pressure detecting means so that the pressure in the storage container is higher than the pressure in the transporting tube. Thereby, the pressure of the storage container can be set to always be higher than the pressure in the transporting tube. Consequently, quantitative feeding-out of fluidized powdery and granular material can be implemented securely and smoothly.

In addition, the storage container is formed to include the plurality of blowing hoppers parallel-disposed below the storage hopper. Fluidized powdery and granular material is alternately filled into and continually fed out into the plurality of blowing hoppers. This arrangement enables the fluidized powdery and granular material to be stable fed.

Furthermore, the feeding-out tube includes the vertical section vertically extending, the sloped portion, and the acceleration-gas nozzle. The sloped portion is provided adjacent to the vertical section, and slopes in the transfer direction with respect to the vertical section. The acceleration-gas nozzle injects an acceleration gas along the slope direction to the sloped portion. According to the above configuration, the velocity of the fluidized powdery and granular material in the slope direction is increased by the acceleration gas injected through the acceleration-gas nozzle. In addition, confluence with the flow in the gas flow transporting tube can be smoothly implemented, and smooth feeding-out can be implemented without causing clogging in the feeding-out tube and the transporting tube during the feeding-out.

Still furthermore, the arrangement is made such that the transfer-directional component of the flow velocity of the fluidized powdery and granular material accelerated by the acceleration gas injected through the acceleration-gas nozzle is higher than the gas flow velocity in the gas flow transporting tube. By this arrangement, the confluence can be implemented even smoother, and the amount of blowing gas to be blown into the gas flow transporting tube can be minimized.

Still furthermore, since the feeding-out tube is formed to have the constant cross section, occurrence of clogging and variations in the flow velocity can be inhibited. Consequently, smooth feeding-out can be implemented.


**BEST MODE 2**

EMBODIMENT 1

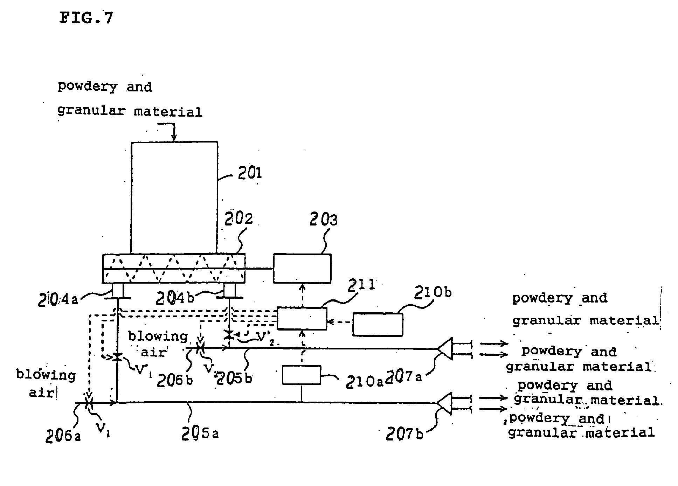

Fig. 7 is an explanatory view of Embodiment 1 of the present invention.

Referring to the figure, numerals 204a and 204b individually denote discharging ports provided at two ends of a screw feeder 202. Symbols 205a and 205b individually denote transporting tubes connected with the respective discharging ports 204a and 204b. Symbols 206a and 206b individually denote blowing tubes provided to communicate with the respective transporting tubes 205a and 205b. Symbols $V_1$ and $V_1$', and $V_2$ and $V_2$' denote shut-off valves connected with the respective blowing tubes 206a and 206b.

Symbols 210a and 210b individually denote clogging detectors provided onto the respective transporting tubes 205a and 205b. Each of the clogging detectors 210a and 210b is formed to have a function using, for example, pressure differentials and an ultrasonic flow switch.

Each of the clogging detectors 210a and 210b detects clogging occurred in the transporting tube, and inputs a detection signal to a controller that will be described below. Numeral 211 denotes a controller 211 that inputs a detection signal and thereby controls the rotation of a drive motor 203 and open/close operations of the shut-off valves $V_1$ and $V_1$' and the shut-off valves $V_2$ and $V_2$'.

Hereinbelow, operation of the present embodiment configured as described above will be described. Fluidized powdery and granular material in a storage hopper 201 is fed out by the screw feeder 202 to one of the two discharging ports 204a and 204b. The discharging ports to which the fluidized powdery and granular material is fed out is determined depending on the rotational direction of the drive motor 203. Suppose the fluidized powdery and granular material is fed out to the discharging port 204a. In this case, the fluidized powdery and granular material is discharged from the discharging port 204a to the transporting tube 205a, and is then transferred with air being fed downstream from the blowing tube 206a. At this time, the shut-off valve $V_2$ of the blowing tube 206b remains at a closed state in which no blowing air is fed into the transporting tube 205b.

When a clogging has occurred in the transporting tube 205 during transfer in the transporting tube 205a, the clogging-detector 210a detects the clogging and inputs a clogging signal to the controller 211. In response to the input clogging signal, the controller 211 controls the shut-off valves $V_1$ and $V_1$' to close, and controls the shut-off valves $V_2$ and $V_2$' to open. In addition, the controller 211 controls the rotational direction of the drive motor 203 to be reversed. According to the above operation, the screw feeder 202 starts reverse rotation. Thereby, the fluidized powdery and granular material in the storage hopper 201 is discharged through the discharging port 204b, is fed to the transporting tube 205b, and is transferred downstream with injection gas blown from the blowing tube 206b.

In this way, after the transfer passageway has been shifted from the transporting tube 205a to the transporting tube 205b, the clogging in the transporting tube 205a is eliminated. Then, the passageway is held in a standby state.

In a similar manner, when a clogging has occurred in the transporting tube 205b, the transfer passageway is shifted to the transporting tube 205a.

As described above, in the present embodiment, when a clogging has occurred in the transfer passageway, the transfer passageway is self-shifted to the other transfer passageway. By this arrangement, fluidized powdery and granular material can be continually transferred without needing transfer of the fluidized powdery and granular material to be suspended for a long time.

EMBODIMENT 2

In Embodiment 1, considering that clogging tends to occur in the configuration including a branch section midway of the transfer passageway. In the present embodiment, the configuration is disclosed in which the plurality of transfer passageways is provided to allow the transfer passageway to be shiftily used when a clogging has occurred.

However, clogging tends to occur primarily in the distributor. Hence, the present embodiment is configured such that no distributor is provided in communication with transfer passageways to eliminate the cause for such an intra-transfer-passageway clogging.

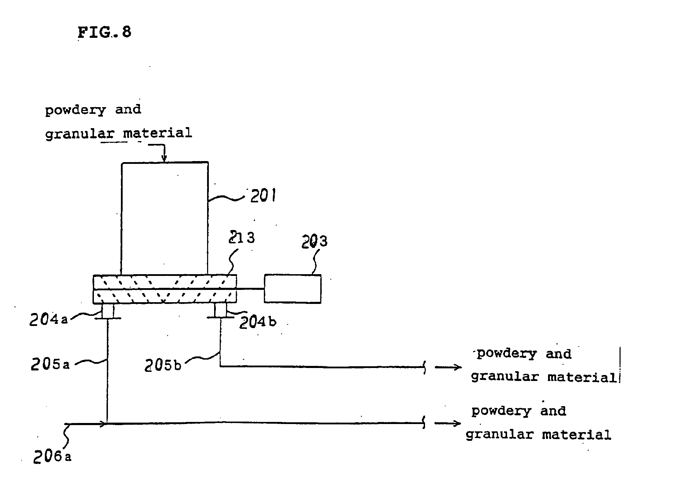

Fig. 8 is an explanatory view of Embodiment 2. Like reference numerals/symbols designate portions identical to those shown in Fig. 7, and detailed descriptions for the identical portions are omitted here from.

Referring to the figure, numeral 213 denotes a screw feeder in which a spiral screw is formed bilaterally symmetric with respect to an axial center as a boundary. When the screw feeder 213 is rotationally driven, fluidized powdery and granular material in a storage hopper 201 is fed out in units of an equal amount from discharging ports 204a and 204b provided at two ends of the screw feeder 213. Then, the fluidized powdery and granular material is fed into transporting tubes 205a and 205b. The fluidized powdery and granular material fed into the transporting tubes 205a and 205b is then transferred on injection gas blown from blowing tubes 206a and 206b.

As described above, according to the present embodiment, the fluidized powdery and granular material is not distributed midway of the transporting tubes. However, since the fluidized powdery and granular material is distributed when it is fed out from the storage hopper 201, no branch tube needs to be provided midway of the transporting tube. Consequently, the configuration does not cause a clogging such as that caused by the branch tubes in conventional configurations.

In each of the above-described embodiments, the example is shown in which the fluidized powdery and granular material are distributed in units of an equal amount into the two transporting tubes 205a and 205b. However, as in, for example, a case wherein fuel material, such as pulverized coal material or waste pulverized plastic material, are blown from a blast-furnace tuyere, a case occurs in which materials need to be distributed in units of an equal amount into a number of passageways.

In this case, the fluidized powdery and granular material can be distributed in units of an equal amount into a plurality of transporting tubes by combining a plurality of feeding-out apparatus units each formed to include a storage hopper and a screw feeder.

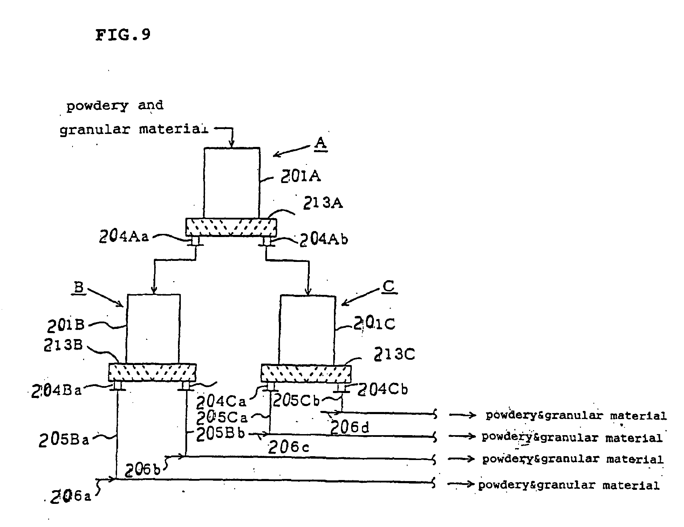

Fig. 9 is an explanatory view showing an example of a combined configuration. Specifically, the figure shows a combined configuration including a plurality of three feeding-out apparatuses A, B, and C.

In the configuration shown in Fig. 9, fluidized powdery and granular material in a storage hopper 201A is fed by a screw feeder 213A in units of an equal amount into storage hoppers 201B and 201C. Then, the fluidized powdery and granular material fed into each of the storage hoppers 201B and 201C is fed out in units of an equal amount from two discharging ports 204Ba and 204Bb and two discharging ports 204Ca and 204Cb. Consequently, the fluidized powdery and granular material is fed in units of an equal amount into the four transporting tubes 205Ba, 205Bb, 205Ca, and 205Cb.

As described above, in the combined configuration including the plurality of feeding-out apparatuses each formed to include the storage hopper and the screw feeder, entry of fluidized powdery and granular material into a single storage hopper enables the fluidized powdery and granular material to be fed into the plurality of transporting tubes in units of an equal amount.

When a configuration is built in which the above-described three feeding-out apparatuses are combined into one set, and a plurality of the aforementioned sets of the apparatuses are combined, the fluidized powdery and granular material can be quantitatively fed out into an even larger number of feeders.

Since Best Mode 2 is configured as described above, it has advantages as described below.

A plurality of discharging ports is provided in the fluidized powdery and granular material feeding-out apparatus that quantitatively feeds out the fluidized powdery and granular material, and a transporting tube is connected with each of the discharging ports to pneumatically transfer fluidized powdery and granular material by selectively using the aforementioned plurality of discharging ports and the aforementioned plurality of transporting tubes. Consequently, even when a clogging has occurred in the transfer passageway, continual transfer can be implemented.

The configuration includes a storage container for storing fluidized powdery and granular material, a screw feeder that includes discharging ports at two end portions for quantitatively feeding-out the fluidized powdery and granular material stored in the aforementioned storage container, transporting tubes connected with the aforementioned individual discharging ports, clogging detectors provided to the individual transporting tubes to detect clogging in the individual transporting tubes, and controllers for inputting clogging signals of the clogging detectors to shift the rotational direction of the screw feeders. As such, the fluidized powdery and granular material can be pneumatically transferred by selectively using the aforementioned plurality of discharging ports and the aforementioned plurality of transporting tubes. Consequently, even when a clogging has occurred in the transfer passageway, continual transfer can be implemented.

Still another configuration includes a storage container for storing fluidized powdery and granular material, and a screw feeder that includes a spiral screw formed bilaterally symmetric with respect to an axial center as a boundary and that includes discharging ports formed at two end portions. Thereby, since the fluidized powdery and granular material can be distributed at the time of fluidized powdery and granular material feeding-out, no distributor needs to be provided midway of the transporting tube. Consequently, a clogging is not easily caused midway of the transporting tube.

As still another configuration, a fluidized powdery and granular material feeding-out apparatus includes at least one combined set of three fluidized powdery and granular material feeding-out powdery and granular material feeding-out apparatuses each of which includes a storage container for storing fluidized powdery and granular material and a screw feeder that includes a spiral screw formed bilaterally-symmetric with respect to an axial center as a boundary and discharging ports at two end portions. Two of the aforementioned three apparatuses are disposed in parallel, and fluidized powdery and granular material fed out from the other one of the three apparatuses is fed into the aforementioned two apparatuses. Thereby, in addition to the above-described advantages, the fluidized powdery and granular material can be fed out into a plurality of transporting tubes.


**BEST MODE 3**

EMBODIMENT 1

Embodiment 1 will be described with reference to an example case in which fluidized powdery and granular material is blown into a blast furnace used as a high-temperature/high-pressure reactor furnace for producing pig iron from iron ore and coal.

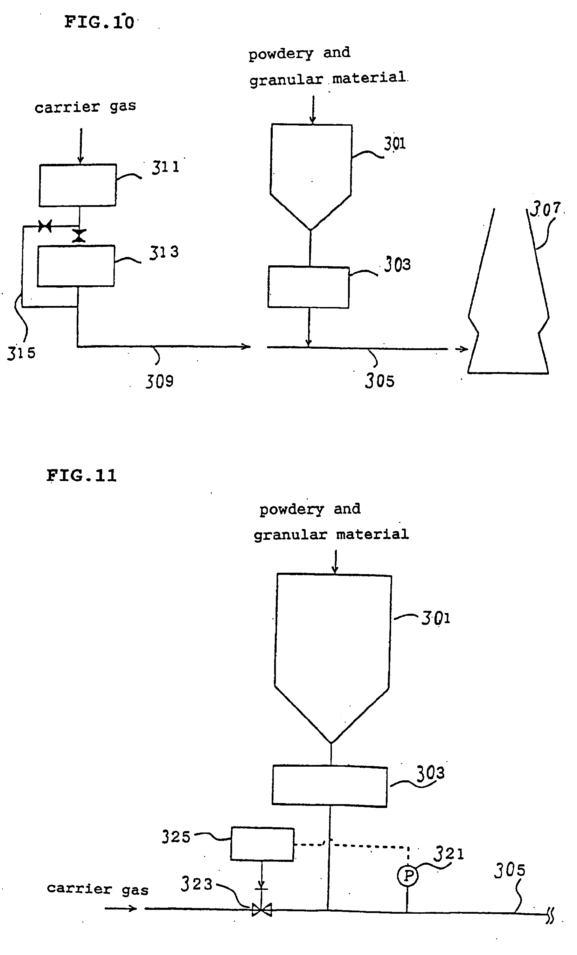

Fig. 10 is an explanatory view of Embodiment 1 of the present invention. Referring to the figure, numeral 301 denotes a blowing tank 301 for storing fluidized powdery and granular material such as pulverized coal material, numeral 303 denotes an feeding-out apparatus that is provided below the blowing tank 301 and that quantitatively feeds out the fluidized powdery and granular material, and numeral 305 denotes a transporting tube for transporting the fed-out fluidized powdery and granular material to a blast furnace 207.

Numeral 309 denotes a blowing tube provided in communication with the transporting tube 305 and that feeds carrier gas. Numeral 311 denotes a compressor that is provided for the blowing tube 309 and that compresses the carrier gas. Numeral 313 denotes a cooler that is provided on a downstream side of the compressor 311 and that cools the compressed gas. Numeral 315 denotes a bypass tube 315 bypassing the cooler 313.

Hereinbelow, operation of the present embodiment configured as above will be described. In a case where the internal pressure of the blast furnace is set to 4 kg/cm$^2$ (gauge pressure), when pressure loss occurring in the transporting tube 305 is taken into account, the internal pressure of the blowing tank 301 is set to about 7.5 kg/cm$^2$ (gauge pressure). To stable transport the fluidized powdery and granular material at a pressure of 7.5 kg/cm$^2$ (gauge pressure), when the lowest carrier-gas flow velocity is set to 20 m/s at the atmospheric pressure, a gas flow velocity of about 7.0 m/s is necessary.

Under the above conditions, the present embodiment is set such that the carrier gas is pressurized up to 8 kg/cm$^2$ (gauge pressure). The pressurized gas is then fed to the transporting tube 305 as a carrier gas via the bypass tube 315 without being passed through the cooler 313.

When the carrier gas has been pressurized up to 8 kg/cm$^2$ (gauge pressure), the gas temperature rises up to 110°C in the compression course. A case is assumed in which the transporting tube inside diameter is 38.4 mm, and the gas temperature at an entry of the transporting tube 305 is 100°C (reduced by 10°C from the temperature at an entry of the compressor). In this case, a necessary gas amount to obtain a necessary gas flow velocity of 7 m/s is 187 Nm$^3$/h.

A case is assumed in which the carrier gas is not transferred via the cooler 313 without being passed through the bypass tube 315, the temperature of the carrier gas is set to 20°C, a necessary gas amount to obtain 7.0 m/s is

238 Nm$^3$/h.

As such, according to the present embodiment, a sufficient gas amount is about 79% of a conventionally used carrier-gas amount.

For the above reason, the compressor capacity can be reduced. In addition, since the amount of gas to be injected to the blast furnace is reduced, reduction in the intrafurnace temperature can be prevented.

A case occurs in which transfer needs to be performed for fluidized powdery and granular material such as waste pulverized plastic material that become in a high-temperature state and a semi-molten state and that hence can cause adhesion and clogging in a tube-inner-wall portion. To prevent the problems, the transfer operation may be performed such that part of gas compressed by the compressor 311 is caused to flow into the cooler 313, and the remaining part thereof is caused to flow into the bypass tube 315, thereby regulating the gas temperature at an entry of the transporting tube 305.

EMBODIMENT 2

Embodiment 2 is to implement, for example, reduction in wear of the transporting tube and the prevention of reduction in the thermal efficiency of a combustion furnace. First, principles will be described before an apparatus is described in detail.

The lowest gas flow velocity for stable transporting fluidized powdery and granular material is considered to be proportional to a final flow velocity of the granules. While the final flow velocity is variable depending on the ambient pressure, it is uniquely defined according to granule characteristics (such as granule diameter and granule density) at the atmospheric pressure.

In more specific, a final flow velocity (Ut) of spherical granules is obtained according to the following expression (1):

$$Ut = g(\rho p - \rho f) \times dp^2/18\mu \qquad (Ar < 104)$$

$$dp \times (4g^2(\rho p - \rho f)^2/225\rho f\mu)^{1/3} \ (104 < Ar < 9.43 \times 10^4) \qquad (1)$$

$$(3g(\rho p - \rho f)dp/\rho f)^{1/2} \qquad (9.43 \times 10^4 < Ar < 3 \times 10^9)$$

Where,

Ar = $\quad dp^3\rho f(\rho P - \rho f)/\mu^2$

$\rho p$: $\quad$ Granule density (kg/m$^3$)

$\rho f$: $\quad$ Gas density (kg/m$^3$)

dp: $\quad$ Granule diameter (m)

$\mu$: $\quad$ Gas viscosity (Pa·s)

g: $\quad$ Gravitational acceleration (m/s$^2$)

For fluidized powdery and granular material of which the granule diameter (dp) is larger than or equal to about 2 mm, Ar > $9.43 \times 10^4$. (For example, suppose $\rho p$: 1,000 kg/m$^3$; dp: 2 mm; $\mu$: 189 $\times$ 10$^{-7}$Pa·s; and g: 9.8 m/s$^2$. In this case, Ar = $2.2 \times 10^5$, and Ar > $9.43 \times 10^4$.)

Accordingly, the third expression of expression (1) is applied. In addition, since $\rho f$ is proportional to P (P: pressure), a final flow velocity (Ut$_1$) under a pressure (P1) and a final flow velocity (Ut$_0$) at an atmospheric pressure (P0) are presumed to be related with each other as follows:

$$Ut_1 = Ut_0 \times (P0/P1)^{1/2} \qquad (2)$$

According to the above expression, it can be presumed that the final flow velocity when the ambient pressure varies may be handled to be inversely proportional to the square-root of the pressure (expression (2)). Accordingly, a lowest gas flow velocity (Umin) for stable fluidized powdery and granular material transportation can also be obtained by relying on the intra-transporting tube pressure as in the following expression (3).

$$Umin = Umin0 \times (P0/P1)^{1/2} \qquad (3)$$

Where,

Umin: Lowest gas flow velocity (m/s) at the intratransporting tube pressure
Umin0: Lowest gas flow velocity (m/s) at the atmospheric pressure
P0: Atmospheric pressure ($kg/cm^2$)
P1: Intra-transporting tube pressure ($kg/cm^2$)

As can be seen from the above, by obtaining the lowest gas flow velocity (Umin0) at the atmospheric pressure, the lowest gas flow velocity (Umin) at the intra-transporting tube pressure can be obtained according to the above-described expression (3). Consequently, by setting the carrier gas flow velocity of the carrier gas to be higher than or equal to the lowest gas flow velocity (Umin) obtained as above, the fluidized powdery and granular material can be stable transferred. Furthermore, by setting the flow velocity of carrier gas to as close a value as possible to the lowest gas flow velocity (Umin), wear of the tube can be reduced.

Hereinbelow, referring to the above-described principles, a practical method and apparatus for controlling the transfer flow velocity will be described.

Fig. 11 is an explanatory view of an apparatus according to the present embodiment. Numeral 301 is a blowing tank for storing blowing fluidized powdery and granular material, and numerical 303 denotes an feeding-out apparatus for quantitatively feeding-out the fluidized powdery and granular material into a transporting tube. The feeding-out apparatus 303 is a mechanical feeding-out apparatus, such as a table feeder and screw feeder. Including the mechanical feeding-out apparatus 303 in the configuration completely avoids use of carrier gas or reduces the amount thereof when feeding-out powdery and granular material.

Numeral 305 denotes a transporting tube for transporting the fluidized powdery and granular material. Numeral 321 denotes a pressure detector 321 for detecting the pressure in the transporting tube 305. Numeral 323 denotes a flow-rate-regulating valve for regulating the flow of carrier gas. Numeral 325 denotes a controller 325 that performs an arithmetic operation to obtain a flow rate of carrier gas, which is the lowest flow velocity, according to the detection signal. In addition, the controller 325 controls the flow-rate-regulating valve 323 according to the result of the arithmetic operation.

Hereinbelow, the apparatus configured as above will be described.

First, according to specifications of fluidized powdery and granular material to be transferred, a lowest flow velocity in the atmospheric pressure is preliminarily obtained and stored into the controller 325.

In practical blowing of fluidized powdery and granular material, the controller 325 detects the pressure in the transporting tube 305. Then, using a value thus detected, the controller 325 operates lowest flow velocity according to the above-described expression (3), and thereby controls the flow-rate-regulating valve 323 to implement the flow velocity in the practical operation.

According to the above arrangement, the blowing operation can be implemented at the lowest flow velocity at the intra-transporting tube pressure. Hence, wear and other problems can be prevented.

Hereinbelow, an experimental example will be described.

Specifications of a transfer system applied in the experimental example is as follows:

- Intra-reactor-furnace pressure: 4 $kg/cm^2$ (gauge pressure)
- Transporting tube diameter: 40A (inside diameter: 38.4 mm)
- Transporting tube length: 150 m
- Fluidized powdery and granular material density: 1,000 $kg/m^3$
- Fluidized powdery and granular material flow rate: 1,899 kg/h

As a result of testing of transfer performed in an atmospheric-pressure phenomenon, the lowest carrier-gas flow velocity (Umin0) was found to be Umin0 = 14 m/s. In a transfer-system plan, the lowest flow velocity was set as Umin = 20 m/s with a margin.

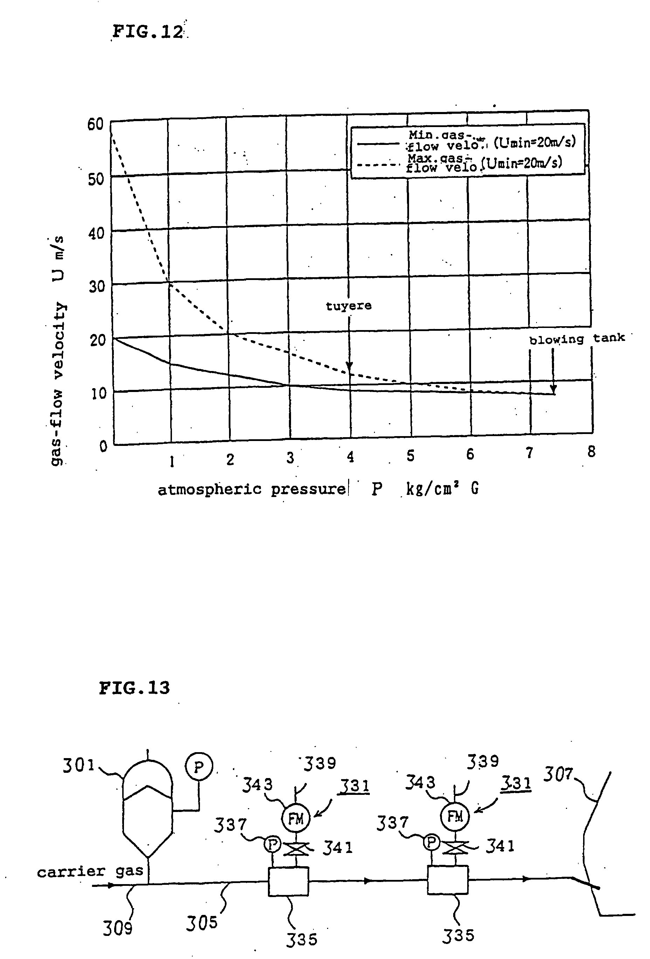

The pressure in a transporting tube below a blowing tank discharging port was set as P = 7.5 $kg/cm^2$ (gauge pressure). In these conditions, 7.0 m/s is obtained according to the above-described expression (3) as gas flow velocity at an entry of the transporting tube, i.e., the discharging port of the blowing tank (P = 7.5 $kg/cm^2$ (gauge pressure)). In a similar manner, the lowest flow velocity in a pressure range of from the atmospheric pressure to 7.5 $kg/cm^2$ (gauge pressure) was obtained according to expression (3). The flow velocities obtained are shown in the form of a line chart in Fig. 12, and are represented by the solid line therein.

The intra-transporting tube pressure decreases as proceeding downstream, and the gas flow velocity increases as the intratube pressure decreases. Accordingly, the gas flow velocity increases as proceeding downstream. Referring to Fig. 12, a broken line represents a tendency of the gas flow velocity increase according to the reduction in the intratube pressure of the transporting tube when the gas flow velocity at the entry of the transporting tube (P = 7.5 kg/cm$^2$ (gauge pressure)) was set to 7.0 m/s.

In comparison between the solid line and the broken line in Fig. 12, the broken line is always positioned above the solid line. From this, it can be known that stable transfer can be implemented by setting the gas flow velocity in the entry of the transporting tube (P = 7.5 kg/cm$^2$ (gauge pressure)) to 7.0 m/s.

In addition, the gas flow velocity in the entry of the transporting tube (P = 7.5 kg/cm$^2$ (gauge pressure)) set to 7.0 m/s is 12 m/s (flow velocity at a furnace tuyere) even at maximum. Hence, the above is not problematic from the viewpoint of wear of the tube.

Furthermore, the necessary gas flow rate is as Q = 224 Nm$^3$/h, and a solid-gas ratio of at least 6 can be achieved. Consequently, transfer can be implemented with a less carrier-gas amount and at a high solid-gas ratio.

As described above, according to the present embodiment, the reduction in wear of the tube as well as a high solid-gas ratio can be achieved. Concurrently, stable fluidized powdery and granular material transfer can be implemented.


EMBODIMENT 3

In Embodiment 2, the method of setting the lowest flow velocity has been disclosed, and the example of setting the lowest flow velocity has been disclosed.

However, as the broken line shows in Fig. 12, in the method of setting only the lowest flow velocity at the'entry of the transporting tube, the intratube pressure decreases as the flow proceeds to downstream. This allows the flow velocity to increase higher than the necessary lowest flow velocity (as shown by the solid line in Fig. 3).

In view of the above, Embodiment 3 is designed to implement transfer of fluidized powdery and granular material at a flow velocity that is close to the lowest flow velocity in the entire portion of the transfer passageway.

Fig. 13 is an explanatory view of the present invention. In the figure, the same reference numerals/symbols designate portions identical to those in Embodiments 1 and 2, and detailed descriptions thereof are omitted here from.

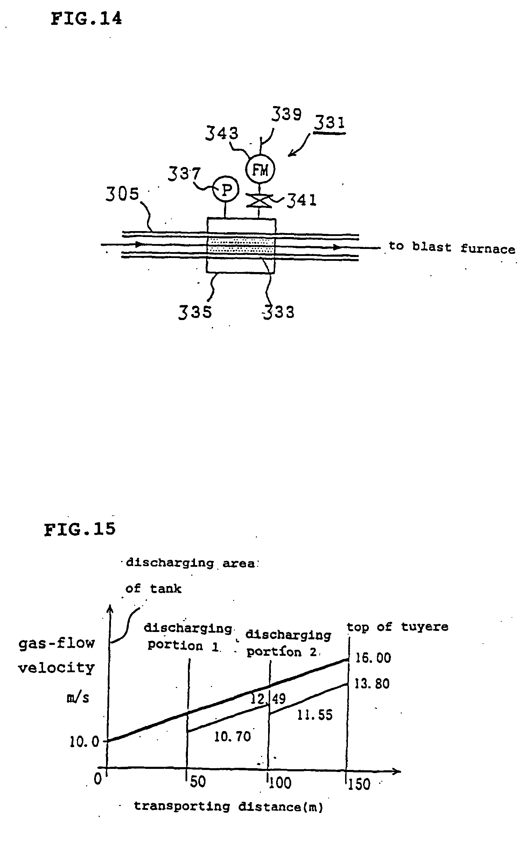

Numeral 331 denotes carrier-gas-discharging device that are provided in a plurality of portions and that individually discharges a predetermined amount of carrier gas. Fig. 14 is an enlarged explanatory view of one of the carrier-gas discharging device.

The carrier-gas discharging device 331 includes a porous pipe member 333 inserted midway of a transporting tube 305, a chamber 335 covering the porous pipe member 333, a pressure gauge 337 that is provided for the chamber 335 and that detects the pressure of carrier gas in the chamber 335, an discharging tube 339 for discharging gas in the chamber 335, a shut-off valve 341 connected with the discharging tube 339, and a flow-meter 343 provided for the discharging tube 339.

Considering a passage flow velocity in an discharging portion, the porous pipe member 333 is designed to have an optimal length.

In the carrier gas discharging device 331 thus configured, when carrier gas is injected to pass there through, the carrier-gas is discharged to the side of the chamber 335 through innumerable pores of the porous pipe member 333. The carrier gas in the chamber 335 is discharged outside when the shut-off valve 341 opens. In this way, since the carrier gas is uniformly discharged toward the chamber 335 through the entire periphery and length of the porous pipe member 333 without fluidized powdery and granular material remaining therein.

Hereinbelow, a detailed description will be made regarding operations and advantages in a case in which the carrier gas is discharged by the carrier-gas discharging device 331 configured as above from the chamber 335.

Specifications of an applied transfer system are as follows:

- Intra-reactor-furnace pressure: 4 kg/cm$^2$ (gauge pressure)
- Transporting tube diameter: 32A (inside diameter: 38.4 mm)
- Transporting tube length: 150 m
- Fluidized powdery and granular material flow rate: 30 kg/min.

The conditions were set to include: 32A as the bore diameter of the transporting tube; 30.0 kg/min. as a fluidized powdery and granular material blowing amount; 28.3 m/s as a transfer lowest flow velocity at the atmospheric pressure, which was obtained such that 14.5 m/s was determined based on experimental values or calculated values, and it was then multiplied by a safety factor of 2.0. In this case, the carrier-gas amount becomes 4.08 Nm$^3$/min. at a transfer pressure of 8.0 kg/cm$^2$. The temperature was set to 0°C.

In the above, suppose a pressure at the discharging port of the blowing tank is set to 8.0 kg/cm$^2$. In this case,

the lowest carrier-gas flow velocity at the entry point can be obtained to be 10.0 m/s according to expression (3) shown in Embodiment 2. Table 1 shows the operational behavior when the gas flow velocity at the discharging port of the blowing tank is set to 10.0 m/s.

As can be seen from Table 1, the transfer flow velocity is 11.43 m/s at a distance of 50 m from the blowing tank. However, at this point, the pressure is reduced to 7.0 kg/cm$^2$. A lowest carrier-gas flow velocity of 10.7 m/s at the distance is obtained according to expression (3) shown in Example 2.

According to the above, the gas is discharged by using the carrier-gas discharging device 331 so that the gas flow velocity at the distance of 50 m from the blowing tank is set to 10.7 m/s. In this case, the discharge amount is expressed as (11.43 - 10.7) $\times$ (32.9/2)$^2\pi \times$ 7 = 0.259 Nm$^3$/min.

Table 2 shows operational behavior when a gas of 0.259 Nm$^3$/min. is discharged at a distance of 50 m.

The pressure values according to the above-described arithmetic operations are represented as absolute pressures.

Table 3 shows operational behavior when a gas of 0.288 Nm$^3$/min. is further discharged at a distance of 100 m.

Fig. 15 is a graph representing the operational behavior shown in Table 3. The vertical axis represents the gas flow velocity, and the horizontal axis represents the distance from the blowing tank. As can be seen from the graph, compared to a case where gas is not discharged, a higher solid-gas ratio can be achieved, and the wear of the tube can be reduced. The reduction can be implemented because the carrier gas is discharged at a plurality of portions in the course of the transporting tube to reduce the flow velocity to a lowest carrier-gas flow velocity necessary at each of the portions.

The above-described embodiment is disclosed by way of an example in which the gas is discharged in two portions. However, the larger the number of discharging portions, the narrower the range of variations in the intratube flow velocity. As such, the number of discharging portions is preferably increased.

For example, sintered metal may be used for the porous pipe member. However, the present invention is not limited thereby, and a different material may be used as long as it can be used as a porous pipe member capable of discharging the carrier gas from the entirety thereof.

Since Best Mode 3 is configured as above, it has advantages as described below.

In a fluidized powdery and granular material feeding method for blowing fluidized powdery and granular material by using carrier gas, since a high-temperature carrier gas is used, the carrier-gas amount can be reduced. In addition, the capacity of a compressor for compressing the carrier gas can be reduced. Furthermore, when the feed end is a blast furnace, since an appropriate amount of gas can be blown to the blast furnace, reduction in intrafurnace temperature can be prevented.

An arithmetic expression is disclosed that produces a lowest carrier-gas flow velocity at an intra-transporting tube pressure from a lowest carrier-gas flow velocity at the atmospheric pressure, and the carrier-gas amount is set so that the carrier-gas flow velocity in the transporting tube becomes the lowest carrier-gas flow velocity obtained according to the arithmetic expression. Thereby, blowing can be implemented at the lowest flow velocity at the aforementioned pressure. In addition, a high solid-gas ratio can be achieved, and wear of the transporting tube can be inhibited.

In the above, the lowest carrier-gas flow velocity is set to a value obtained such that a lowest carrier-gas flow velocity obtainable through experiment or arithmetic operation is multiplied by a safety factor.

Furthermore, the carrier gas is discharged in a plurality of portions in the course of the transporting tube to set the gas flow velocity to the lowest carrier-gas flow velocity necessary for transporting the fluidized powdery and granular material. As such, the fluidized powdery and granular material can be transferred at a flow velocity that is close to the lowest flow velocity in the entirety of the transporting tube passageway. As a result, an even higher solid-gas ratio can be achieved, and concurrently, wear of the transporting tube can be further reduced.

Table 1

| Distance from blowing tank (m) | 0 (Tank discharging port) | 50 | 100 | 150 |
|---|---|---|---|---|
| Pressure [Value in parentheses ( ): Gauge pressure] (kg/cm$^2$) | 8.0 (7.0) | 7.0 (6.0) | 6.0 (5.0) | 5.0 (4.0) |
| Carrier-gas amount (m$^3$/min) | 0.510 | 0.583 | 0.680 | 0.816 |
| Carrier-gas flow velocity (m/s) | 10.00 | 11.43 | 13.22 | 16.00 |
| Solid/gas ratio (kg/kg) | 30.0 / (4.08 $\times$ 1.29) = 5.70 | | | |

Table 2

| Distance from blowing tank (m) | 0 (Tank discharging port) | 50 | 100 | 150 |
|---|---|---|---|---|
| Pressure [Value in parentheses ( ): Gauge pressure] (kg/cm$^2$) | 8.0 (7.0) | 7.0 (6.0) | 6.0 (5.0) | 5.0 (4.0) |
| Carrier-gas amount (m$^3$/min) | 0.510 | 0.546 | 0.637 | 0.764 |
| Carrier-gas flow velocity (m/s) | 10.00 | 10.70 | 12.49 | 14.99 |
| Solid/gas ratio (kg/kg) | 30.0 / (3.82 × 1.29) = 6.09 | | | |

Table 3

| Distance from blowing tank (m) | 0 (Tank discharging port) | 50 | 100 | 150 |
|---|---|---|---|---|
| Pressure [Value in parentheses ( ): Gauge pressure] (kg/cm$^2$) | 8.0 (7.0) | 7.0 (6.0) | 6.0 (5.0) | 5.0 (4.0) |
| Carrier-gas amount (m$^3$/min) | 0.510 | 0.546 | 0.589 | 0.706 |
| Carrier-gas flow velocity (m/s) | 10.00 | 10.70 | 11.55 | 13.85 |
| Solid/gas ratio (kg/kg) | 30.0 / (3.06 × 1.29) = 6.59 | | | |

**BEST MODE 4**

EMBODIMENT 1

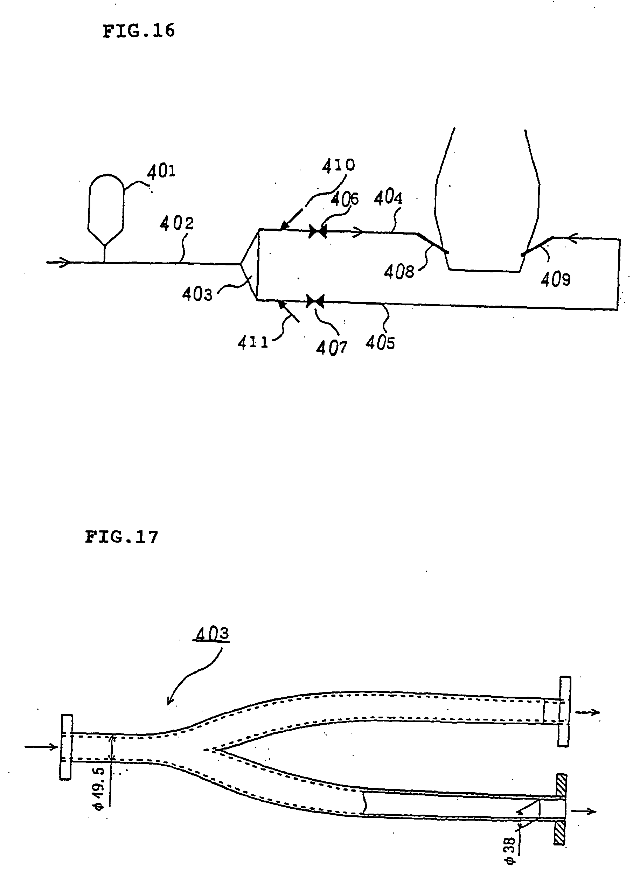

Fig. 16 is an explanatory view of Embodiment 1 according to the present invention. The figure shows an example of the present invention applied to an apparatus that blowing waste pulverized plastic material as fuel material from a tuyere in blast-furnace operation. Since blast-furnace tuyeres are disposed circumferential on a furnace casing, the length of a blowing tube differs depending on which one of a front tuyere and the opposing front tuyere is used. Hence, the intratube pressure loss is also different depending on the length of the blowing tube. As such, in a configuration in which uniform distribution is merely performed, differentials are caused between the amounts of blowing to the individual tubes.

Taking the above into consideration, in the present embodiment, air that is resistant to the downstream side of a distributor is injected. Thereby, the flow rates of the waste pulverized plastic material flowing into the individual blowing tubes are thereby regulated to be equal.

Hereinbelow, a detailed description will be given with reference to Fig. 16. Numeral 401 denotes a blowing tank for storing waste pulverized plastic material as blowing material and for quantitatively feeding-out the material. Numeral 402 denotes a transporting tube that forms a transfer passageway and that is provided for the blowing tank 401. Numeral 403 denotes a distributor that separates the transfer passageway into branched transfer passageways and distributes the transfer material there through. Numerals 404 and 405 respectively denote first and second branch tubes provided for the distributor 403. Numeral 406 and 407 denotes shut-off valves connected with the respective first and second branch tubes 404 and 405. Numerals 408 and 409 individually denote blowing lances connected with end portions of the respective first and second branch tubes 404 and 405.

Numerals 410 and 411 individually denote air-regulating nozzles that are disposed near the distributor 403 and that are connected with the respective first and second branch tubes 404 and 405. The air-regulating nozzles 410 and 411 are each disposed in the direction causing air resisting the transfer flow to be injected. Example existing configurations include the following configuration in which air is injected in the direction along which the air resists the transfer flow. In the example configuration, an axial line of a tube corresponding to each of the first and second branch tubes 404 and 405 is arranged at 90 degrees to an axial line of a branch tube corresponding to each of the first and second branch tubes 404 and 405 individually disposed in a downstream side which is lower than the injection point.

Fig. 17 is a side view partially including a sectional view showing the distributor 403. As shown in Fig. 17, to prevent abrupt variations in the tube cross sections, the branch section 403 is formed to include a pre-branch portion having an inside diameter of 49.5 mm and two post-branch portions each having an inside diameter of 38 mm. That is, the cross section of the pre-branch portion is substantially the same as that of the post-branch portion.

Hereinbelow, operations of the present embodiment thus configured will be described. As described above, since the lengths of the first and second branch tubes 404 and 405 are different from each other, there occurs a difference in piping resistance. Because of the piping resistance and other factors, such as fabrication errors, differences occur in amounts of the waste pulverized plastic material distributed to the first and second branch tubes 404 and 405.

Taking the above into account, the present embodiment is arranged as follows. Regulatory air is injected from the air-regulating nozzles 410 and 411 in a direction along which the regulatory air resists the transfer flow to regulate the flow rate of powdery and granular material flowing by using the regulatory air being injected. Thereby, the flow rate can be reduced lower than that in a case where the aforementioned air is not injected. Consequently, the arrangement increases the flow rate of powdery and granular material flowing in the branch tube into which the regulatory air is not injected or in which a less amount of the regulatory air is injected, thereby regulating the flow rates in two sides to be identical.

In practice, the above regulation is implemented using powdery and granular material-flow-rate detectors provided for the individual first and second branch tubes 404 and 405. The amounts of air to be injected from the nozzles 410 and 411 are regulated according to the results of detection performed by the powdery and granular material-flow-rate detectors.

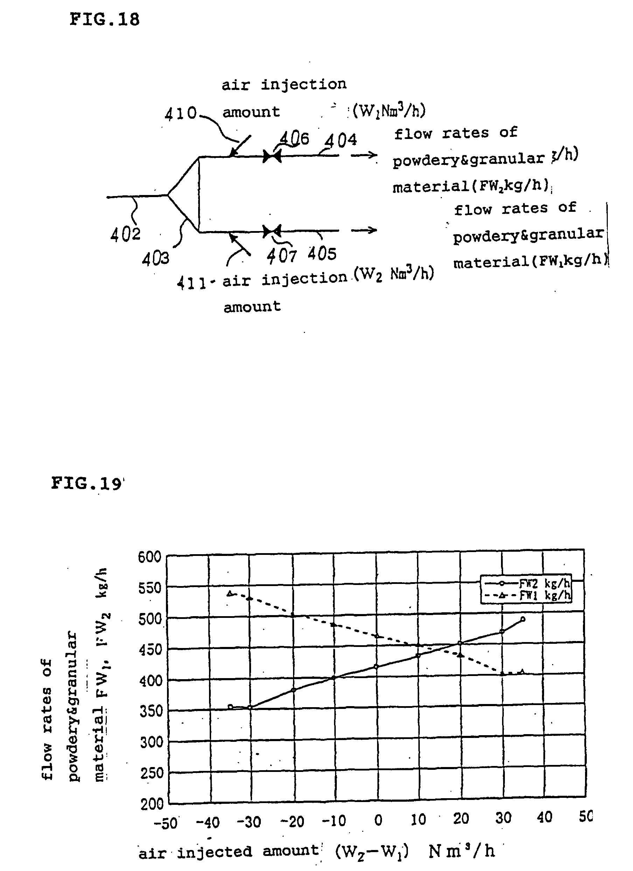

Hereinbelow, an experimental example of flow-rate regulation for powdery and granular material is disclosed. Fig. 18 is an enlarged view of the branch section shown in Fig. 16. As shown in Fig. 18, in the experiment, amounts of regulatory air injected into the first and second branch tubes 4 and 5 are respectively represented by $W_1 Nm^3/h$ and $W_2 Nm^3/h$. Flow rates of powdery and granular material flowing in the first and second branch tubes 4 and 5 are respectively represented by $FW_1 kg/h$ and $FW_2 kg/h$.

Fig. 19 is a graph showing the result of the experiment, in which the vertical axis represents the flow rate (kg/h), and the horizontal axis indicates the differential $(W_2 - W_1) Nm^3/h$ between the amounts of regulatory air injected into the first and second branch tubes 4 and 5. The broken line represents a flow rate in the first branch tube 4, and the solid line represents a flow rate in the second branch tube 5.

As can be seen from Fig. 19, when the differential between the amounts of the regulatory air is zero (for example, when $W_1$ and $W_2$ are individually zeros), the differential between the amounts of waste pulverized plastic material flowing in the first and second branch tubes 4 and 5 becomes 55 kg/h. In this case, the amount of regulatory air injected into the first branch tube 4 is increased. The above causes a differential of about 15 $Nm^3/h$ between the amounts of regulatory air to be injected to the first and second branch tubes 4 and 5. Accordingly, the flow rate in each of the first and second branch tubes 4 and 5 becomes 40 kg/h, thus enabling the flow rates to be identical.

In addition, the result shown in Fig. 19 teaches that the blowing of the regulatory air enables the flow rates in the individual branch tubes to be controlled in a wide range.

As described above, according to the present embodiment, by using a very simple means, powdery and granular material distribution control can be securely implemented in a wide range not to cause a clogging in the discharging tube.

In the above-described embodiment, the example has been disclosed in which the air-regulating nozzles 410 and 411 are individually connected with the two tubes, i.e., first and second branch tubes 4 and 5. However, to separate the transfer passageway into two transfer passageways through the distributor 3, air-regulating nozzles may be connected with, for example, two branch tubes in each of which the transfer amount increases when the piping resistance is low and is not regulated.

Moreover, in the above-described embodiment, the example has been disclosed in which the regulatory air is injected from each of the air-regulating nozzles 410 and 411 in the direction opposing the transfer flow. However, in the present invention, the essential is that air is injected in any way to be resistant into the transfer flow in the branch tube for which the flow rate should be reduced. As such, air may be injected perpendicular to the transfer flow.

Furthermore, in the above-described present embodiment, no limitation is specified regarding the positions for disposing the air-regulating nozzles 410 and 411. However, the air-regulating nozzles 410 and 411 are preferably disposed immediately below the distributor 3.

EMBODIMENT 2

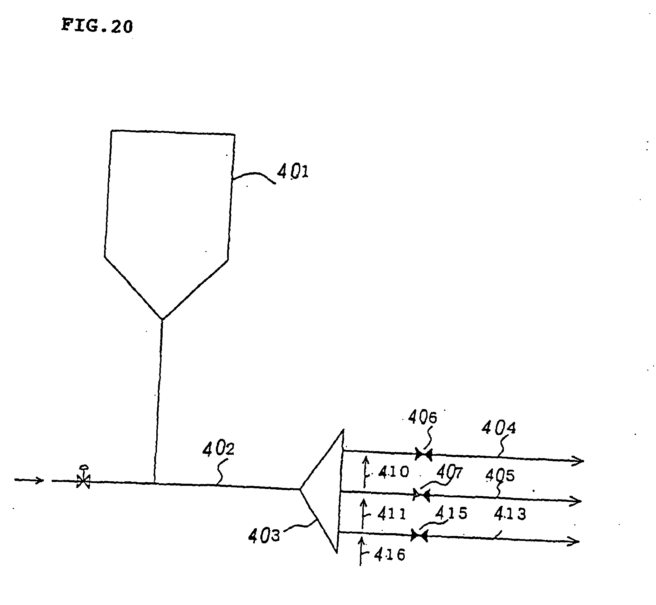

Fig. 20 is an explanatory view of Embodiment 2 according to the present invention. In the figure, like reference numerals/symbols designate portions identical and corresponding to those in Fig. 16 showing Embodiment 1.

For preventing clogging from occurring in a branch tube because of powdery and granular material remained in the branch tube held in a transfer-suspension state, the present embodiment is configured such that air for making powdery and granular material to be fluidized (for fluidizing powdery and granular material) is injected into the branch tube.

In specific, shut-off valves 406, 407, and 415 are respectively connected with branch tubes 404, 405, and 413. In addition, purge-air nozzles 410, 411, and 416 are provided upstream of the respective shut-off valves 406, 407, and 415. While the directions of the nozzles 410, 411, and 416 are not specifically limited, the pressure of air to be injected from each of the nozzles should be set higher than that of the carrier gas.

Hereinbelow, operation of the present embodiment will be described. For example, when the transfer of waste pulverized plastic material needs to be stopped for, for example, a convenience at a feed destination, the shut-off valve 415 is controlled to close, thereby clogging the transfer passageway. Subsequently, air is injected from the nozzle 416.

The injected air works to fluidize waste pulverized plastic material existing in a portion between the distributor 403 and the shut-off valve 415 in the branch tube 413. This prevents the aforementioned portion from being blocked with waste pulverized plastic material.

When the branch tube 413 commences blowing of the waste pulverized plastic material, injection of the purge air is stopped. Then, the shut-off valve 415 is controlled to open, and injection of the purge air is stopped. Alternatively, upon or after the shut-off valve 415 opens, injection of the purge air is stopped. At this time, the purge air fluidizes waste pulverized plastic material remaining in a portion between the distributor 403 and the shut-off valve 415. Consequently, the transfer can be smoothly commenced.

As described above, according to the present embodiment, using the simple configuration, clogging can be prevented from occurring in the tube because of fluidized powdery and granular material. Furthermore, the branch tubes can flexibly be selected and controlled to turn on or off.

As above, in Embodiments 1 and 2, the fluidized powdery and granular material distribution control and the clogging prevention have been separately described. In Embodiment 2, however, the direction of injection of air from each of the nozzles is not specifically limited. The configuration may be arranged to include nozzles disposed to be capable of injecting resistant air to the transfer flow. In this case, the nozzles can be used to control distribution of waste pulverized plastic material in the transfer of the waste pulverized plastic material. Concurrently, the nozzles can be used to prevent a tube clogging from occurring in a transfer-suspension state.

Since Best Mode 4 is configured as above, it has the advantages as described below.

Gas is injected into transfer passageways on the 'downstream side of the distributor to be resistant to the transfer flow, and regulation is performed to maintain the flow-rate balance of powdery and granular material flowing in each of the individual transfer passageways. As such, using the simple means, distribution control of the powdery and granular material can securely be implemented in a wide range without causing a tube clogging. Furthermore, even when a transfer passageway on the downstream side of the distributor is blocked with powdery and granular material, gas is injected into the blocked transfer passageway, and the powdery and granular material in the blocked passageway is fluidized. This arrangement prevents clogging from occurring in the transfer passageway clogging. As such, using the simple configuration enables the prevention of a tube clogging that can be caused by powdery and granular material. Furthermore, it enables flexible selection among the branch tubes and transfer commencement/suspension.

Still furthermore, the configuration includes the distributor provided midway of the transfer passageway to distribute the flow amount of powdery and granular material into a plurality of the transfer passageways, shut-off valves connected with the aforementioned plurality of transfer passageways, and gas-injecting nozzles for injecting gas into the aforementioned plurality of transfer passageways each provided between the aforementioned shut-off valve and the aforementioned distributor. Each of the gas-injecting nozzles is provided to inject gas from the downstream side to the upstream side. As such, the configuration enables the powdery and granular material to be uniformly distributed during transfer of the powdery and granular material. Furthermore, the configuration prevents a tube clogging that can occur because of transfer suspension.

**BEST MODE 5**

EMBODIMENT 1

The present embodiment relates to passageway-clogging detection.

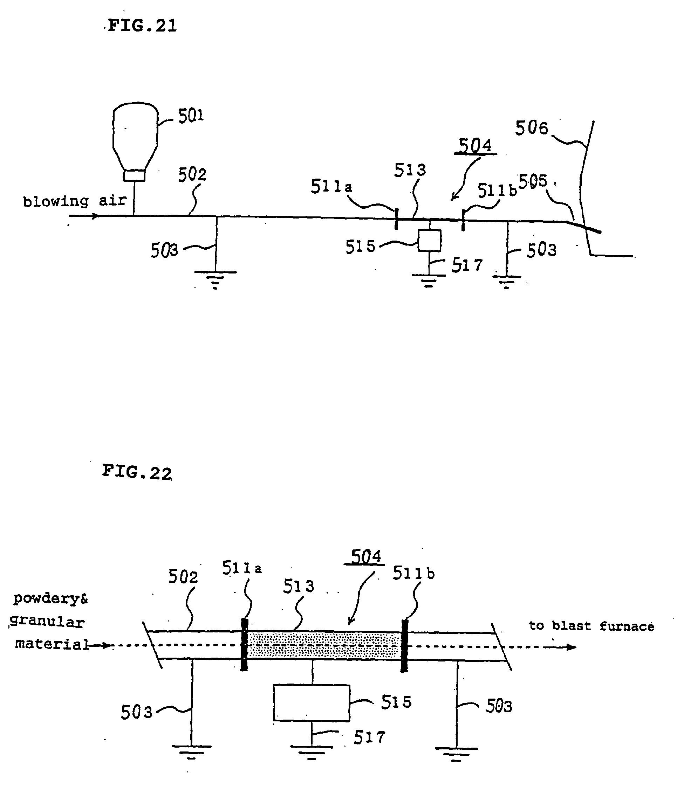

Fig.21 is an explanatory view of Embodiment 1 according to the present invention. The figure shows an example of a case of application to a pneumatic transfer line that blowing waste pulverized plastic material used as fuel in blast-furnace operation. Referring to the figure, numeral 501 denotes a blowing tank for storing waste pulverized plastic material as blowing material and for quantitatively feeding-out the powdery and granular material. Numeral 502 denotes a transporting tube that forms a transfer passageway and that is connected with the blowing tank 501. Numeral 503 denotes ground lines disposed in a plurality of portions. Numeral 504 denotes a clogging detector that is connected midway of the transporting tube 502 and that detects transporting tube clogging. Numeral 505 denotes a blowing lance of a blast furnace 506.

Fig. 22 is an enlarged view of a portion of the clogging detector 504 shown in Fig. 21. Referring to Fig. 22, the clogging detector 504 will be described in detail. Numerals 511a and 511b individually denote insulation members disposed apart from the transporting tube 502. Numeral 513 is an electric-charge tube disposed between the insulation members 511a and 511b. Numeral 514 denotes an electric-charge controller 514 that is connected with the electric-charge tube 513 and that controls holding time of static electricity generated in the electric-charge tube 513. Numeral 517 denotes a ground line connected with the electric-charge controller 515.

The electric-charge tube 513 is formed of, for example, steel line pipe, and is charged with static electricity generated through friction with powdery and granular material passing through the tube. Since the static electricity is different depending on the characteristics of transfer material (raw material), the length of the electric-charge tube 513 is determined according to the characteristics.

Not to allow the static electricity charged in the electric-charge tube 513 to continually discharge, the electric-charge controller 515 controls the holding time of the charged static electricity. Specifically, the electric-charge controller 515 keeps managing a continual pattern of charge-discharge-charge-discharge and determines normality and abnormality of transfer.

Hereinbelow, a description will be made regarding operation of the present embodiment configured as above.

Waste pulverized plastic material fed out from the blowing tank 501 is urged by injection air into the transporting tube 502 and pneumatically transferred. Then, the material is blown into the blast furnace 506 through the blowing lance 505.

Static electricity is generated through the phenomenon of friction between different materials. Static electricity is also generated through friction between waste pulverized plastic material and the transporting tube 502.

The static electricity generated in the transporting tube 502 is caused to discharge through the ground lines 503. Thereby, electricity is not charged in the entire range of the transporting tube 502.

The static electricity generated in the electric-charge tube 513 is inhibited by the insulation members 511a and 511b from being transferred to the side of the transporting tube 502. The electric-charge controller 515 controls discharge to be iterated at predetermined time pitch via the ground line 517.

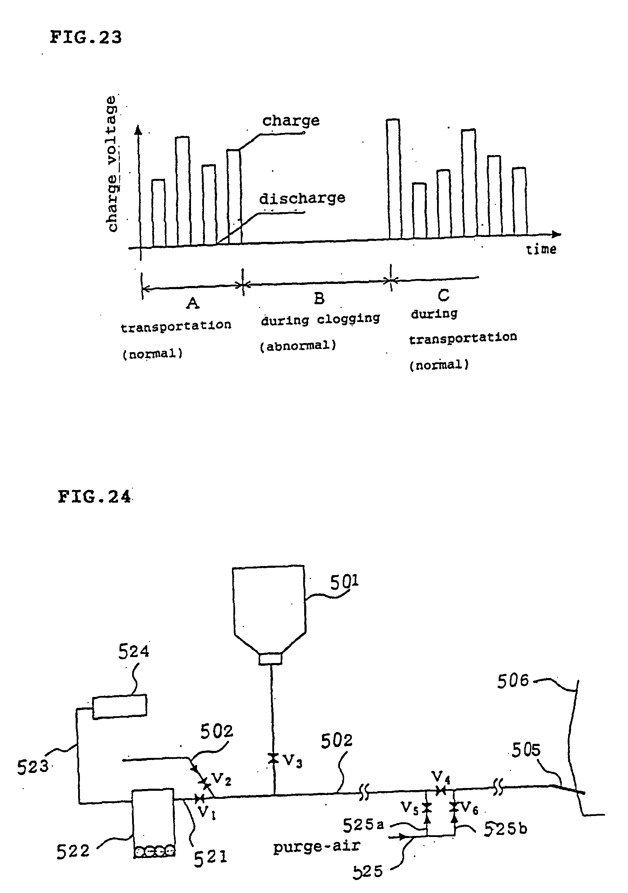

Fig. 23 is a graph showing a charge-discharge state in the electric-charge controller 515. The vertical axis represents the charge voltage, and the horizontal axis represents time.

During normal transfer, for example, as shown in a region A, charge and discharge is iterated in units of predetermined time pitch. The time pitch of charge-discharge-charge-discharge can be regulated from units of a second to units of a minute.

However, when a clogging has occurred in a course of the transporting tube 502, the waste pulverized plastic material is thereby blocked not to flow in the transporting tube 502. Consequently, no charge is generated in the electric-charge tube 513, as shown in a region B shown in Fig. 23. When no charge is thus generated in a time longer or equal to a predetermined time, the electric-charge controller 515 issues an alarm. Various alarm types are conceivable that include a type using a blinkable alarm lamp and a type in which an alarm signal is issued to a monitoring center.

Upon removal of the clogging, iteration of charge and discharge is resumed in units of the predetermined time, as shown in a region C in Fig 23.

As described above, the present embodiment has been arranged such that the clogging existence/nonexistence is determined according to static electricity generated in the transporting tube 2. According to this arrangement, clogging occurring in the transporting tube 502 can be securely detected regardless of measured portions.

The above can be implemented because when no clogging occurs in the transporting tube 502, the powdery and granular material moves; and when the powdery and granular material moves, static electricity is more or less generated in any portions of the transfer line.

The above-described embodiment has been disclosed by way of example in which the single clogging detector is provided. However, two or more clogging detectors may be provided for the transporting tube 502. Since static electricity has characteristics of occurring differently depending on the type of transfer material, the length of the electric-charge tube 513 is appropriately set according to the characteristics.

In the disclosed example, the steel line pipe is used as a material of the electric-charge tube 513. However, a different material, such as a resin material, may be used as long as it has characteristics of generating static electricity through friction with transferred raw material and the characteristic of withstanding the transfer pressure.

EMBODIMENT 2

The present embodiment relates to elimination of clogging occurred in a transporting tube.

Fig. 24 is an explanatory view of Embodiment 2, in which like reference numerals/symbols designate portions identical and corresponding to those in Fig. 24.

Referring to the figure, numeral 521 denotes a reverse-transporting tube 521 provided upstream of a transporting tube 502 in continuation to the transporting tube 502. Numeral 522 denotes a collector box that is connected with the reverse-transporting tube 521 and that collects a clogging. Numeral 524 denotes a dust collector connected with the collector box 522 through a tube 523. Numeral 525 denotes a purge-air tube that is provided midway of the transporting tube 502 and that is separated in two portions 525a and 525b. In addition, the purge-air tube 525 is connected with a high-pressure air supply source such as a compressor. A gas-feeding means is realized with the purge-air tube 525 and the high-pressure air supply source.

Symbols $V_1$ to $V_6$ individually denote shut-off valves connected with individual tubes.

In the present embodiment configured as above, in a regular operation state, waste pulverized plastic material as blowing raw material is fed out from the blowing tank 501. Then, the material is transferred through the transporting tube 502, and subsequently, is blown into a blast furnace 506 through the blowing lance 505. At this time, the shut-off valves $V_2$, $V_3$, and $V_4$ are each kept in an open state, and the shut-off valves $V_1$, $V_5$, and $V_6$ are each kept in a closed state.

When the transporting tube 502 has been blocked, the blowing operation of blowing air is stopped. Concurrently, the shut-off valves $V_1$, $V_5$, and $V_6$ are each controlled to open, and the shut-off valves $V_2$, $V_3$, and $V_4$ are controlled to close. In the above state, high-pressure purge air is blown through the purge-air tube 525. Thereby, a clogging substance that blocked the transporting tube 502 is removed, thereby eliminating the clogging. A clogging substance that blocked upstream of the shut-off valve $V_4$ in the transporting tube 502 back-flows through the transporting tube 2, and is then collected into the collector box 522. On the other hand, a clogging substance that blocked downstream of the first branch tube 4 flows downstream through the transporting tube 502. Then, the clogging substance is blown into the blast furnace 506 through the blowing lance 505.

A clogging substance that blocked upstream of the shut-off valve $V_4$ receives a pneumatic pressure in the reverse direction of the clogging. Consequently, the force required for clogging-elimination may be less. On the other hand, on the downstream side of the shut-off valve $V_4$, since the shut-off valve $V_4$ is provided on the downstream side, the volume of the transporting tube 502 from the shut-off valve $V_4$ to the blowing lance 505 is small. Hence, a clogging can be eliminated at a relatively great force.

When a high-pressure purge air is blown from the purge-air tube 525, dust can occur from the collector box 522. However, in this case, dust is collected into the dust collector 524 through the tube 523.

As described above, in the present embodiment, clogging substances are collected into the collector box 522, and are thereby removed outside of the transfer-passageway system. According to this arrangement, the clogging cannot be the cause for recurrence of clogging. In addition, since purge air is applied in the opposite direction along which the clogging has occurred, low-energy clogging elimination can be implemented.

Furthermore, according to the present embodiment, on the downstream feed end, the blast furnace exists, and clogging substances are burned in the furnace. As such, a clogging can be controlled to move downstream for the clogging elimination.

In the above, the clogging detection and the clogging elimination have been independently described in Embodiments 1 and 2. However, a configuration may of course be built by incorporating the individual clogging detection and the clogging elimination.

In this case, the open/close operations of the individual shut-off valves $V_1$ to $V_6$ can be automatically controlled, thereby enabling the clogging detection and the clogging elimination to be automatically implemented.

Since Best Mode 5 is thus configured, it has advantages as described below.

Monitoring is performed for the generation state of static electricity occurring in the transfer passageway because of powdery and granular material pneumatic transfer. An instance in which the static electricity is not generated in a time longer than or equal to a predetermined time is determined to be an instance in which a clogging has occurred in the transfer passageway. Consequently, the clogging in the transfer passageway can be securely detected.

Furthermore, when a clogging has occurred in the transfer passageway, a reverse-transfer gas is fed upstream from the downstream side. As such, a clogging substance caused a clogging is collected into the collection container provided outside of the transfer passageway, the clogging can be eliminated at less energy. Thus, the cause of the clogging is eliminated not to allow another clogging to occur for the same cause.

## BEST MODE 6

Hereinbelow, an embodiment of the present invention will be described referring to the drawings.

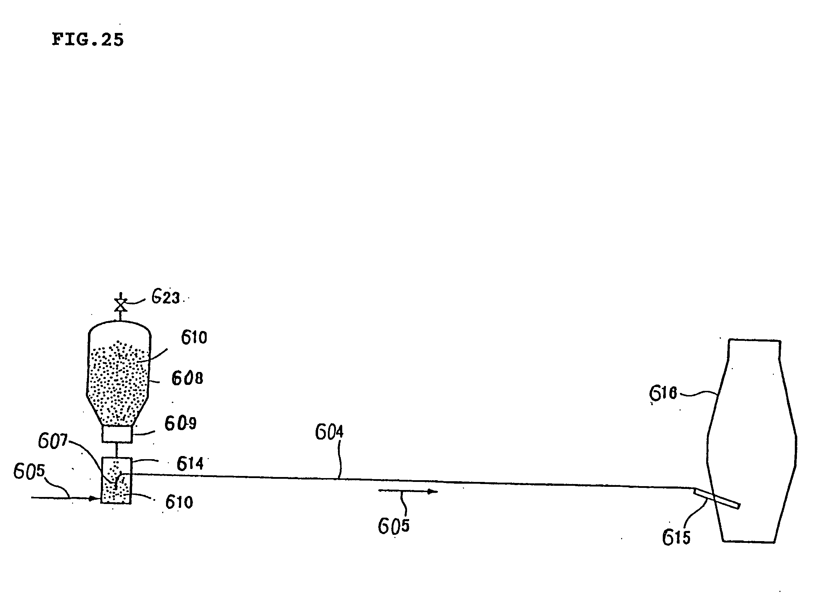

Fig. 25 shows an outline of a facility flow in a case in which a powdery and granular material fluidization transfer apparatus that is suitable for implementing the present invention is used to blowing powdery and granular material to desired reactor containers. Powdery and granular material 610 is continually fed out by a mechanical feeding-out apparatus 609 from a storage hopper 608 into a fluidization transfer chamber 614. The powdery and granular material 610 flowing and accumulating in the fluidization transfer chamber 614 is forcedly fluidized by a carrier gas 605 such as air, and is then blown into the fluidization transfer chamber 614. Subsequently, the powdery and granular material 610 is urged into a nozzle pipe 607 disposed in a central portion, and is transferred into a transfer piping 604. Subsequently, the powdery and granular material 610 is transferred by the carrier gas 605 through the transfer piping 604, and is blown from a blowing lance 615 into a blast furnace and a reactor 616, which is an industrial furnace. In the portion from the fluidization transfer chamber 614, a plurality of lines including combinations of the nozzle pipe 7 and the transfer piping 604 are appropriately provided.

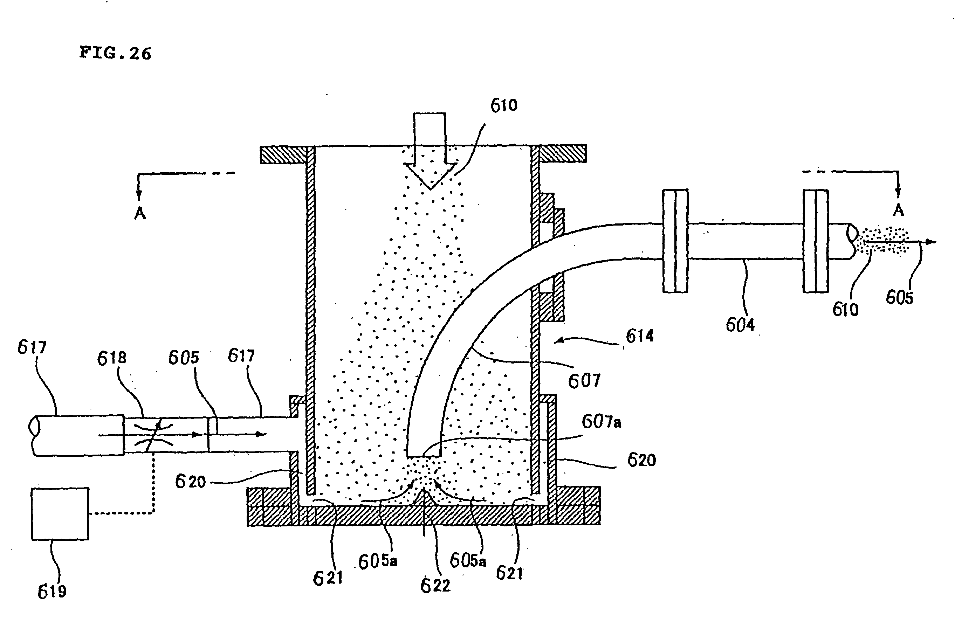

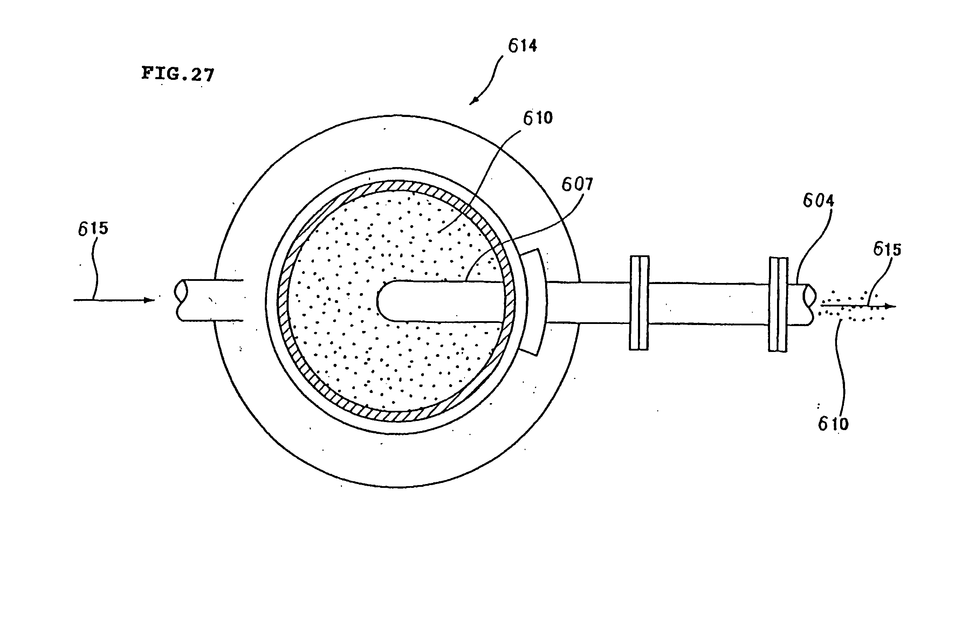

Fig. 26 is a schematic vertical cross-sectional view showing the fluidization transfer chamber 614; and in addition, it shows a gas tube, and a powdery and granular material tube that are provided near the fluidization transfer chamber 614. Fig. 27 is a cross-sectional view along the arrow-line A-A in Fig. 26. As shown in Fig. 26, a tube 617 for feeding the carrier gas 605 is provided on a lower exterior sidewall of the fluidization transfer chamber 614. A flow-rate controller 619 regulates the flow rate of the carrier gas 505. A gas-storing header 620 is provided inside of a lower circumferential wall of the fluidization transfer chamber 614. A slit-like nozzle 621 for injecting the carrier gas 605 is provided in inner-bottom-peripheral sidewall portion of the fluidization transfer chamber 614 to communicate with the gas-storing header 620. The slit-like nozzle 621 is thus provided to inject a carrier gas 605a in the form of a planar gas flow to a bottom central portion from the bottom peripheral wall. The shape of projection of the carrier gas 605a onto a bottom surface is designed to form such that many fan-shaped portions reverse-radiantly concentrate on a central portion. In addition, a smooth protrusion 622 is provided in a bottom-surface central portion. The protrusion 622 is shaped as a mountain and is formed such that a conical sloped section smoothly arcades inward. The carrier gas 605a thus reverse-radiantly injected flows along the conical section, and flows upward of the central portion. As such, the powdery and granular material 610 continually fed from an upper portion is caused to naturally drop into the fluidization transfer chamber 614, and accumulates therein. On the other hand, the planar reverse-radiant carrier gas 605a fluidizes the powdery and granular material 610. Furthermore, as described above, the powdery and granular material 610 is urged into the nozzle pipe 607 that has an entry 607a in the central portion, and is then fed into the transfer piping 604.

In the powdery and granular material fluidization feed step, the carrier gas 605 is used to forcedly fluidize the powdery and granular material 610 in the above-described form of high-viscosity gas flow. As such, the powdery and granular material 610 does not need to be continually fluidized. That is, no problems should arise as long as regulation is performed so that an amount greater than or equal to a predetermined amount of the powdery and granular material 610 always exists in the fluidization transfer chamber 614. Furthermore, fluidization feed is arbitrarily enabled from a state in which the powdery and granular material 610 has accumulated in the fluidization transfer chamber 614. Thus, fluidization feed can be implemented even for the filled-in powdery and granular material 610. In this case, transportation can be implemented at a solid-gas ratio that is higher than that achievable in conventional techniques. Furthermore, for feeding-out of the powdery and granular material 610, since quantitative feeding-out need not be carried out, feeding-out precision is not required. Still furthermore, consideration need not be taken into pulsating flow that can occur with a mechanical feeding-out apparatus when feeding-out a relatively small amount of powdery and granular material is fed out. As described above, according to the method of the present invention, an ordinary powdery and granular material mechanical feeding-out apparatus is sufficient for use.

The gas-storing header 620 is provided in the low outer-circumferential wall of the fluidization transfer chamber 614. This enable the inhibition of drift flow in the circumferential direction of the carrier gas 605 injected from the slit-like nozzle 621.

Furthermore, the present invention does not require, for example, apparatus members and pressurized gas, which are used for powdery and granular material aeration in conventional techniques. In addition, the operation can be sufficiently implemented with the carrier gas 605 used only to secure the lowest flow velocity necessary for powdery and granular material transportation. Still furthermore, the present invention uses a gas-flow-rate control method that is superior to a gas-pressure control method in the controllability of the flow rate of blowing to the reactor 616 of the powdery and granular material 610.

Hereinbelow, the present invention will be described in more detail with reference to an example. By using the powdery and granular material fluidization transfer apparatus that uses gas flow according to the present invention shown in Figs. 25 to 27, testing (working example) was performed for blowing waste pulverized plastic material into a blast furnace through a tuyere portion thereof. In addition, comparative testing (as a comparative example) was performed according to a conventional method. In the comparative testing, pressurized gas was used to fluidize through an aeration plate. Concurrently, control was performed for the flow rate of blowing of the waste pulverized plastic material into the blast furnace, and carrier gas was used to blowing the material through a transporting tube into a blast furnace through the tuyere portion thereof. Fig. 4 shows major testing conditions.

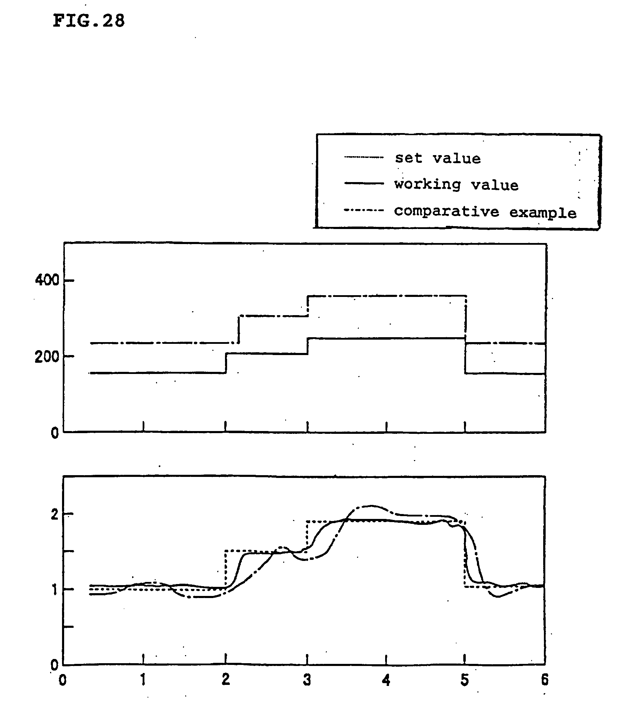

In the testing, the working example and the comparative example were compared for the controllability of the flow rate of blowing of the waste pulverized plastic material into the furnace. The results were as shown in Fig. 28. According to the actual measurement values shown in the figure with respect to the set values of intrafurnace blowing flow rate of the waste pulverized plastic material, it can be known that the controllability in the working example is significantly improved in comparison to that in the comparative example. In addition, it can be known that the consumed-gas flow rate for the transfer therebetween in the working example is significantly reduced in comparison to that in the comparative example of used.

Regarding the above-described testing results, tendencies similar thereto can be predicted to be obtainable in cases in which finer powdery and granular material in which granule diameters are ranged from several tens of microns to several hundreds of microns.

Since Best Mode 6 is thus configured, it has advantages as described below.

Through use of the method and the apparatus according to the present invention, operation can be implemented at low costs and high efficiency. Concurrently, the operation can be implemented maintaining the high controllability in blowing transfer amount for blowing powdery and granular material of various types as objects. The object ranges from relatively fine powdery and granular material to relatively coarse powdery and granular material, such as waste pulverized plastic material, which are blown into a blast furnace and a different reactor by using gas flow. Thus, the above-described powdery and granular material fluidization transporting method and apparatus can be provided, and useful industrial advantages can be obtained therefrom.

Table 4

| | |
|---|---|
| Waste-pulverized-plastic granule diameter, length | $\phi$8 mm, 5 to 15 mm long |
| Waste-pulverized-plastic bulk specific gravity | 300 kg/m$^3$ |
| Blowing tube diameter | 40A |
| Blowing tube length | Horizontal: 50 m |
| | Vertical: 15 m |
| Blast furnace tuyere | 5 atm |
| Set blowing amount | 1 to 1.8 t/h |

**Claims**

1. An apparatus for feeding out a powdery and granular material comprising:

   a feeding device for quantitatively feeding out a powdery and granular material in a storage container into a transporting tube pneumatically for transporting the powdery and granular material;
   a device for detecting pressure in the storage container;
   a device for detecting pressure in the transporting tube;
   a pressure regulator for regulating pressure in the storage container, according to detection results performed by the device for detecting pressure in the storage container and the device for detecting pressure in the transporting tube to cause pressure in the storage container to be higher than pressure in the transporting tube.

2. The apparatus according to claim 1, wherein the storage container comprises a plurality of blowing hoppers which are parallel-disposed below a storage hopper, the powdery and granular material being alternately filled up into the blowing hoppers from the storage hopper, and the powdery and granular material being continually fed out.

3. An apparatus for feeding out a powdery and granular material comprising:

   a feeding device for quantitatively feeding out the powdery and granular material in a storage container via an feeding-out tube into a transporting tube provided to pneumatically transport the powdery and granular material, wherein the feeding-out tube has,
   a vertical portion vertically extending, and a sloped portion provided continually to the vertical portion and the sloped portion that slopes in a transporting direction with respect to the vertical portion, and
   an acceleration-gas nozzle for injecting an acceleration gas along a slope direction to the sloped portion.

4. The apparatus according to claim 3, wherein the powdery and granular material is accelerated by the acceleration gas injected from the acceleration-gas nozzle, and a velocity component of the powdery and granular material in the transporting direction is not less than a gas-flow velocity in the transporting tube.

5. The apparatus according to claim 3, wherein the sloped portion is a range of from 40 to 60 degrees.

6. The apparatus according to claim 4, wherein a slope angle of the sloped portion is from 40 to 60 degrees.

7. The apparatus according to claim 3, wherein the cross section of the feeding-pipe is constant.

8. The apparatus according to claim 3, further comprising:

a device for detecting pressure in the storage container;

a device for detecting pressure in the transporting tube;

a pressure regulator for regulating pressure in the storage container, according to detection results performed by the device for detecting pressure in the storage container and the device for detecting pressure in the transporting tube to cause pressure in the storage container to be higher than pressure in the transporting tube.

9. A method for feeding out and transporting a powdery and granular material comprising the steps of:

providing a plurality of discharging ports at a feeding device for quantitatively feeding out the powdery and granular material, connecting a plural of transporting tubes with the plurality of discharging ports, wherein transporting tubes to pneumatically transport the powdery and granular material, selectively using the plurality of discharging ports and the plurality of transporting tubes;

detecting a clogging of the powdery and granular material in the transporting tube which transports the powdery and granular material;

stopping feeding out from the discharging ports, which is connected with the transporting tube where the clogging has occurred, when the clogging is detected; and

feeding out and transporting a powdery and granular material by air flow from the discharging ports that are in a standby state among a plurality of the discharging ports.

10. An apparatus for feeding out a powdery and granular material comprising:

a storage container for storing a powdery and granular material;

a screw feeder for quantitatively feeding out a powdery and granular material in the storage container;

discharging ports positioned at the lower parts of the screw feeder;

a transporting tube, individually connected with the discharging ports positioned at the two ends;

a detecting device for detecting a clogging in each of the transporting tubes; and

a controller for inputting a clogging signal from the clogging detector for shifting a rotational direction of the screw feeder.

11. An apparatus for feeding out a powdery and granular material comprising:

a storage container for storing a powdery and granular material; and

a screw feeder having a spiral screw formed bilaterally symmetric with respect to an axial center as a boundary and discharging ports at two ends.

12. An apparatus for feeding out a powdery and granular material comprising :

a storage container for storing the powdery and granular material; and

at least one set of device for feeding out a powdery and granular material, having three units of a powdery and granular material which provide a screw feeder having a spiral screw formed bilaterally-symmetric with respect to an axial center as a boundary and discharging ports at two ends,

wherein two of the three powdery and granular material are parallel-disposed, and the powdery and granular material is fed out from the discharging ports are individually fed into the two powdery and granular material.

13. A method for blowing a powdery and granular material comprising the step of:

transporting the powdery and granular material by using a high-temperature carrier gas; and

blowing the transported powdery and granular material.

14. A method for blowing a powdery and granular material comprising the steps of:

quantitatively feeding out a powdery and granular material in a storage container from a blowing-tank into a transporting tube;

pneumatically transporting the powdery and granular material through the transporting tube; and

setting the amount of the carrier gas to cause the velocity of the carrier gas in the transporting tube to be a lowest gas flow velocity expressed by

$$Umin = Umin0 \times (P0/P1)^{1/2}$$

Where,

Umin:     lowest gas flow velocity (m/s) at the intra-transporting tube pressure;
Umin0:     lowest gas flow velocity (m/s) at the atmospheric pressure;
P0:     atmospheric pressure ($kg/cm^2$); and
P1:     intra-transporting tube pressure ($kg/cm^2$).

15. An apparatus for blowing a powdery and granular material comprising:

an feeding-out device for quantitatively feeding out the powdery and granular material from a blowing tank;
an apparatus for pneumatically transporting the powdery and granular material through a transporting tube;
a flow-rate regulator for regulating a blowing flow rate of a carrier gas;
a pressure detector for detecting a gas pressure in the transporting tube; and
a controller for controlling the flow-rate regulator according to detection result performed by the pressure detector,

wherein the controller controls the flow-rate regulator to cause the velocity of the carrier gas in the transporting tube to be a lowest gas flow velocity expressed by

$$Umin = Umin0 \times (P0/P1)^{1/2} ,$$

wherein

Umin:     lowest gas flow velocity (m/s) at the intra-transporting tube pressure;
Umin0:     lowest gas flow velocity (m/s) at the atmospheric pressure;
P0:     atmospheric pressure ($kg/cm^2$); and
P1:     intra-transporting tube pressure ($kg/cm^2$).

16. A method for blowing a powdery and granular material comprising the steps of:

quantitatively feeding out the powdery and granular material from a blowing tank into a transporting tube;
pneumatically transporting the powdery and granular material through the transporting tube; and
discharging a carrier gas in a plurality of portions in a course of the transporting tube to cause a gas velocity to be a lowest gas flow velocity necessary for transporting the powdery and granular material.

17. An apparatus for blowing a powdery and granular material comprising;

an feeding-out device for quantitatively feeding out a powdery and granular material from a blowing tank into a transporting tube;
an transporting device for pneumatically transporting the powdery and granular material through the transporting tube; and
a carrier-gas discharging device for discharging a carrier gas in a plurality of portions in a course of the transporting tube to cause a gas velocity to be a lowest gas flow velocity necessary for transporting the powdery and granular material.

18. The apparatus for blowing the powdery and granular material according to claim 17, further comprising:

a porous pipe member inserted midway of the transporting tube;
a storage container that covers around of the pipe member and that is to store the carrier gas flowed out through the pipe member; and
a gas discharging device for discharging a predetermined amount of gas existing in the storage container.

19. A method for pneumatically transporting a powdery and granular material comprising the steps of:

distributing the powdery and granular material from a transporting tube into a plurality of branch tubes by using a distributor; and

blowing gas into each of the branch tubes to cause the gas to resist the flow, to regulate a balance in flow rate of the powdery and granular material individually flowing into the branch tube.

20. A method for pneumatically transporting a powdery and granular material comprising the steps of:

distributing the powdery and granular material from a transporting tube into a plurality of branch tubes by using a distributor;

shutting off at least one of the plurality of branch tubes; and

blowing gas into shut-off branch tubes to fluidize the powdery and granular material in one of the plurality of branch tubes, to prevent clogging from occurring in the branch tube.

21. An apparatus for pneumatically transporting a powdery and granular material comprising:

a distributor provided between a transporting tube and a plurality of branch tubes to distribute the powdery and granular material in the amount from the transporting tube to the plurality of branch tubes; and

nozzles connected with the plurality of branch tubes to blowing gas in a direction along which the gas resists the flow.

22. An apparatus for pneumatically transporting a powdery and granular material comprising:

a distributor provided between a transporting tube and a plurality of branch tubes to distribute powdery and granular material in the amount from the transporting tube to the plurality of branch tubes;

shut-off valves individually connected with the plurality of branch tubes; and

nozzles that are provided between the shut-off valves and the distributor and that blowing gas to the plurality of branch tubes.

23. The apparatus according to claim 22, wherein the gas is blown in a direction along which the gas resists the flow.

24. The apparatus according to claim 21, wherein a gas blowing direction of the nozzle is set such that an angle of 90 degrees or less is set for the angle formed by an axial line in the gas blowing direction and an axial line of a transfer passageway located farther in a downstream direction than a blowing portion.

25. The apparatus for pneumatically transporting the powdery and granular material according to claim 22, wherein a gas blowing direction of the nozzle is set such that an angle of 90 degrees or less is set for the angle formed by an axial line in the gas blowing direction and an axial line of a transfer passageway located farther in a downstream direction than a blowing portion.

26. A method for transporting a powdery and granular material pneumatically, comprising the steps of:

pneumatically transporting the powdery and granular material from an upstream side to a downstream side;

monitoring a generation state of static electricity occurring in a transporting tube; and

detecting a clogging by determining an instance

wherein the static electricity has not occurred for at least a predetermined time to be an instance wherein a clogging has occurred.

27. A method for transporting a powdery and granular material pneumatically, comprising the steps of:

pneumatically transporting the powdery and granular material from an upstream side to a downstream side of a transporting tube;

eliminating a clogging by feeding a reverse-transfer gas from a downstream side to an upstream side, when a clogging occurs in the transporting tube;

collecting a clogging substance caused by the clogging into a collection storage container, provided outside of the transporting tube.

28. A method for transporting a powdery and granular material pneumatically, comprising the steps of:

pneumatically transporting the powdery and granular material from an upstream side to a downstream side of a transporting tube;

monitoring a generation state of static electricity occurring in the transporting tube because of pneumatic transfer of the powdery and granular material;

determining an instance wherein the static electricity has not occurred for at least a predetermined time to be an instance wherein a clogging has occurred;

pneumatically transporting the powdery and granular material from an upstream side to a downstream side of a transporting tube;

feeding a reverse-transfer gas from a downstream side to an upstream side, to be eliminate the clogging; and

collecting a clogging substance caused by the clogging into a collection container provided outside of the transporting tube.

**29.** An apparatus for powdery and granular material comprising:

a transporting tube for pneumatically transporting a powdery and granular material from an upstream side to a downstream side;

an electric-charge tube provided midway of the transporting tube via an insulation member; and

an apparatus that is connected with the electric-charge tube, that causes static electricity charged in the electric-charge tube to discharge in units of a predetermined time, that monitors a charged state of the electric-charge tube, and that issues a signal when no charge occurs for a predetermined time, to control the charge.

**30.** An apparatus for transporting a powdery and granular material pneumatically, comprising:

a transporting tube for pneumatically transporting the powdery and granular material from an upstream side to a downstream side;

a collection container that is provided on a downstream side of the transporting tube in communication with a transfer passageway and that collects a clogging substance caused a clogging; and

a gas-feeding device that is provided on a downstream side of the transporting tube and that feeds a high-pressure gas from a downstream side to an upstream side.

**31.** An apparatus for transporting a powdery and granular material pneumatically, comprising:

a transporting tube for pneumatically transporting a powdery and granular material from an upstream side to a downstream side;

an electric-charge tube provided midway of the transporting tube via an insulation member;

an electric-charge controller that is connected with the electric-charge tube, that causes static electricity charged in the electric-charge tube to discharge in units of a predetermined time, that monitors a charged state of the electric-charge tube, and that issues a signal when no charge occurs for a predetermined time, thereby controlling the charge;

a collection container that is provided on a downstream side of the transporting tube in communication with a transfer passageway and that collects a clogging substance caused a clogging; and

a gas-feeding device that is provided on a downstream side of the transporting tube and that feeds a high-pressure gas from a downstream side to an upstream side.

**32.** A method for fluidizing and feeding a powdery and granular material comprising:

continually feeding a powdery and granular material into a chamber by using a mechanical feeding-out apparatus, to continually feed the powdery and granular material into the chamber;

injecting a planar gas flow onto the powdery and granular material fed into the chamber from a bottom-surface-circumference sidewall portion in the chamber toward a central portion of a bottom surface of the chamber; and

feeding the powdery and granular material fluidized and blown to an entry of a transportation tube extending from an inside portion of the chamber to an outside portion, the transportation tube being preliminarily provided in a spacing into which the powdery and granular material is blown.

**33.** An apparatus for fluidizing and feeding a powdery and granular material by gas flow comprising:

a mechanical feeding-out device for feeding out a powdery and granular material;

a fluidization feed chamber that is provided in communication with a lower portion of the feeding-out device, that fluidizes the powdery and granular material, to be fed out from the feeding-out device by using a gas flow, and that feeds the powdery and granular material fluidized to an outside portion by using the gas flow, wherein,

the fluidization feed chamber comprises a slit-like nozzle for injecting a planar gas flow in a direction horizontal with respect to a circumferential sidewall of an inner bottom surface toward a central portion of the inner bottom surface; and

a feed tube for introducing the powdery and granular material from an inside portion of the fluidization feed chamber to an outside portion by using the gas flow, wherein the feed tube comprises a inflow part for the powdery and granular material, and the inflow part is positioned in an upper spacing of the central portion of the inner bottom surface of the fluidization feed chamber.

FIG.1

FIG.2

**FIG.3**

**FIG.4**

FIG.5

FIG.6

FIG.7

powdery and
granular material

FIG. 8

powdery and
granular material

201

213    203

204a         204b

205a      205b                           powdery and
                                         granular material

                                         powdery and
                                         granular material
206a

FIG.9

powdery and
granular material

A
201A
213A
204Aa
204Ab

B
201B
213B
204Ba

C
201C
213C
204Cb

204Ca
205Ca
205Bb
205Cb
204Cb
206d
206c

205Ba

206b
206a

→ powdery&granular material
→ powdery&granular material
→ powdery&granular material
→ powdery&granular material

FIG.10

carrier gas

powdery and
granular material

311

301

313

307

315

309

305

FIG.11

powdery and
granular material

301

303

325

321

305

carrier gas    323

FIG.12

FIG.13

**FIG.14**

**FIG.15**

FIG.16

FIG.17

FIG.18

air injection
410 amount    :(W$_1$Nm$^3$/h)
406  404    flow rates of
powdery&granular ℓ/h)
material(FW$_2$kg/h);
flow rates of
powdery&granular
402      material(FW$_1$kg/h)
403
407 405
411·air injection (W$_2$ Nm$^3$/h)
amount

FIG.19

flow rates of powdery&granular material FW$_1$, FW$_2$ kg/h

air injected amount (W$_2$−W$_1$) N m$^3$/h

FIG.20

FIG.21

blowing air

501

502

503

511a

513

504

506

511b 505

515

517

503

FIG.22

504

502

511a

513

511b

powdery&
granular
material

to blast furnace

503

515

517

503

FIG.23

FIG.24

FIG.25

FIG.26

EP 1 211 202 A1

**FIG.27**

**FIG.28**

Legend:
- ——— set value
- ——— working value
- —·—· comparative example

## INTERNATIONAL SEARCH REPORT

| | International application No. |
|---|---|
| | PCT/JP00/04494 |

A.  CLASSIFICATION OF SUBJECT MATTER
Int.Cl⁷  B65G 53/66, B65G 53/22, B65G 53/48, B65G 53/56

According to International Patent Classification (IPC) or to both national classification and IPC

B.  FIELDS SEARCHED

Minimum documentation searched (classification system followed by classification symbols)
Int.Cl⁷  B65G 53/00-53/66, B65G 65/30-65/48

Documentation searched other than minimum documentation to the extent that such documents are included in the fields searched
Jitsuyo Shinan Koho          1922-1996    Toroku Jitsuyo Shinan Koho  1994-2000
Kokai Jitsuyo Shinan Koho  1971-2000    Jitsuyo Shinan Toroku Koho  1996-2000

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP, 57-67422, A (Kawasaki Steel Corporation), | 1 |
| Y | 24 April, 1982 (24.04.82)   (Family: none) | 2 |
| A | | 8 |
| | | |
| Y | WO, 97/14817, A1 (VOEST ALPINE INDUSTRIEANLAGENBAU GMBH), | 2 |
| A | 24 April, 1997 (24.04.97) | 12 |
| | & JP, 11-513646, A  & BR, 9610992, A | |
| | & EP, 856068, A      & AU, 7120796, A | |
| | | |
| A | Microfilm of the specification and drawings annexed to the request of Japanese Utility Model Application No.74509/1988 (Laid-open No.176627/1989) (Hitachi Chemical Co., Ltd.), 15 December, 1989 (15.12.89)   (Family: none) | 3-8 |
| | | |
| A | DE, 2363505, A (Waeschle Maschinenfabrik GmbH), 03 July, 1975 (03.07.75)   (Family: none) | 3-8 |
| | | |
| A | JP, 58-2525, A (Petorokaapu Inc.), 08 January, 1983 (08.01.83) & AU, 6536580, A     & AU, 8536582, A & GB, 2106064, A | 9,10 |

☒  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 October, 2000 (02.10.00) | 10 October, 2000 (10.10.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP00/04494 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP, 5-24649, A (Penta Ocean Construction Co., Ltd.),<br>02 February, 1993 (02.02.93)   (Family: none) | 11<br>12 |
| X | JP, 62-267404, A (Kawasaki Steel Corporation),<br>20 November, 1987 (20.11.87)   (Family: none) | 13 |
| A | JP, 9-208050, A (Kawasaki Steel Corporation),<br>12 August, 1997 (12.08.97)   (Family: none) | 14,15 |
| X<br>A | CD-ROM of the specification and drawings annexed to the<br>request   of   Japanese   Utility   Model   Application<br>No.13442/1993 (Laid-open No.72976/1994)<br>(Nippon Aluminium Co., Ltd.),<br>11 October, 1994 (11.10.94)   (Family: none) | 16,17<br>18 |
| X<br>A | JP, 10-167472, A (Saeki Kensetsu Kogyo K.K.),<br>23 June, 1998 (23.06.98)   (Family: none) | 22<br>19-21,23-25 |
| A | JP, 4-28624, A (Nisshin Flour Milling Co., Ltd.),<br>31 January, 1992 (31.01.92)   (Family: none) | 26,28,29,31 |
| X<br>A | JP, 10-203606, A (Kawasaki Heavy Industries, Ltd.),<br>04 August, 1998 (04.08.98)   (Family: none) | 27,30<br>28,31 |
| X | JP, 46-23079, Y1 (Kayaba Ind. Co., ltd.),<br>10 August, 1971 (10.08.71)   (Family: none) | 32,33 |

Form PCT/ISA/210 (continuation of second sheet) (July 1992)